# EUROPEAN PATENT SPECIFICATION

(11) **EP 2 551 377 B1**
(45) Date of publication and mention of the grant of the patent: **13.09.2017**
(21) Application number: 11759393.9
(22) Date of filing: 22.03.2011
(51) Int. Cl.: C23C 22/34, C23C 22/36, C23C 22/07, C23C 22/83, C23C 28/02, B32B 15/01, C25D 11/26, C25D 5/48

(54) **METHOD FOR PRODUCING A STEEL SHEET FOR A CONTAINER**
VERFAHREN ZUR HERSTELLUNG EINES STAHLBLECHS FÜR EINEN CONTAINER
PROCÉDÉ DE FABRICATION D'UNE TÔLE D'ACIER POUR UN CONTENEUR

(30) Priority: 11.11.2010 JP 2010252742; 23.03.2010 JP 2010066981; 23.03.2010 JP 2010066977
(43) Date of publication of application: 30.01.2013
(73) Proprietor: Nippon Steel & Sumitomo Metal Corporation, Tokyo 100-8071 (JP)
(72) Inventor: TACHIKI, Akira, Tokyo 100-8071 (JP); HIRANO, Shigeru, Tokyo 100-8071 (JP); YOKOYA, Hirokazu, Tokyo 100-8071 (JP); NODA, Masakazu, Tokyo 100-8071 (JP); NISHIDA, Hiroshi, Tokyo 100-8071 (JP); HASEGAWA, Kazushige, Tokyo 100-8071 (JP)
(74) Representative: Vossius & Partner Patentanwälte Rechtsanwälte mbB
(86) International application number: PCT/JP2011/056845
(87) International publication number: WO 2011/118588

(56) References cited:
- JP-A- 2009 001 851
- JP-A- 2009 179 848
- JP-A- 2010 013 728
- JP-A- 2010 013 728

## Description

### Technical Field

The present invention relates to a steel sheet for a container having excellent workability, weldability, film adhesion, coating material adhesion, corrosion resistance under a coating film, rust resistance, and outer appearance, and a method of manufacturing the same.

### Background Art

Metal containers used for beverages and foods are mainly classified into two-piece cans and three-piece cans. The two-piece can represented by a DI can is made by performing a drawing and ironing process and then performing coating on the inner surface side of the can and performing coating and printing on the outer surface side of the can. The three-piece can is made by performing coating on a surface corresponding to the inner surface of the can, performing printing on a surface corresponding to the outer surface of the can, and then performing welding of a can body portion.

The coating process is a necessity for any of the can types before and after making the can. A solvent-based or water-based coating material is used during the coating, and thereafter baking is performed. However, in the coating process, waste materials (waste solvents and the like) and exhaust gas (carbon dioxide and the like) are generated from the coating material. In recent years, for the purpose of the protection of the global environment, an effort to reduce the amount of generated waste materials and exhaust gas has been made. Particularly, in place of the coating, a technique of laminating a film has received attention and has been rapidly popularized.

Until now, regarding the two-piece can, a number of methods of manufacturing a can by laminating a film and techniques related to the methods have been provided. For example, there are "a method of manufacturing a drawn and ironed can (Patent Document 1)", "a drawn and ironed can (Patent Document 2)", "a method of manufacturing a thin-walled deep-drawn can (Patent Document 3)", "a coated steel sheet for a drawn and ironed can (Patent Document 4)", and the like.

In addition, regarding the three-piece can, there are "a film-laminated steel strip for a three-piece can and a method of manufacturing the same (Patent Document 5)", "a three-piece can having a multilayer-structured organic film on a can outer surface (Patent Document 6)", "a steel sheet for a three-piece can having a striped multilayer organic film (Patent Document 7)", "a method of manufacturing a stripe laminated steel sheet for a three-piece can (Patent Document 8)", and the like.

On the other hand, for a steel sheet used as the substrate of a laminate film, in many cases, a chromate film subjected to an electrolytic chromate treatment is used. The chromate film has a double layer structure in which a hydrated chromium oxide layer is present in the upper layer of the metal chromium layer. Therefore, the laminate film (an adhesive layer in the case of a film with an adhesive) ensures adhesion to the steel sheet through the hydrated chromium oxide layer of the chromate film. Although the mechanism by which adhesion is achieved has not been made clear in detail, it is said that the mechanism involves hydrogen bonding of the hydroxyl group of hydrated chromium oxide and the functional group such as the carbonyl group or the ester group of the laminate film.

Moreover, from the viewpoint of the protection of the global environment, a film using no chromate is required, so that an alternative technique of providing a chemical conversion treatment film (Patent Document 9) through an electrolytic treatment with a solution containing Zr and F is disclosed.

In addition, as containers for beverages and foods, metal containers made into cans of steel sheets such as a nickel-plated steel sheet, a tin-plated steel sheet, or a tin alloy-plated steel sheet have been widely used. In such metal containers, coating needs to be performed before or after making the cans. However, in recent years, from the viewpoint of the protection of the global environment, in order to reduce the waste materials caused from the coating materials such as waste solvents or exhaust gas such as carbon dioxide, laminating a film has been widely performed instead of coating.

In addition, as a steel sheet for a container used as the substrate of a coating or a laminate film, in many cases, a steel sheet subjected to a rustproofing treatment by chromate using hexavalent chromate or the like in order to ensure adhesion between the steel sheet and the coating or the film and corrosion resistance has been used (for example, refer to Patent Document 10). Moreover, the chromate-treated steel sheet is formed with a coating layer made of an organic resin on the chromate-treated film for the purpose of imparting organic solvent resistance, fingerprint resistance, scratch resistance, lubricating properties, and the like as necessary.

However, recently, since hexavalent chromate used in the chromate treatment is environmentally harmful, there is a movement to replace the chromate treatment that hitherto has been performed on steel sheets for containers. On the other hand, a chromate film formed on the surface of the steel sheet by the chromate treatment has a high degree of corrosion resistance and coating (or film) adhesion. Therefore, in the case where the chromate treatment is not performed, a significant degradation of corrosion resistance or coating adhesion is expected. Therefore, forming a rustproof layer having good corrosion resistance and coating adhesion by performing a rustproofing treatment on the surface of a steel sheet for a container in place of the chromate treatment is required. As the rustproofing treatment in place of the chromate treatment, various surface treatment methods have been proposed as follows.

For example, in Patent Document 11, a treatment method of immersing a tin-plated steel sheet into a chemical conversion treatment liquid containing phosphate ions and a silane-coupling agent or applying the chemical conversion treatment liquid to the steel sheet and drying the resultant is disclosed.

In addition, for example, in Patent Document 12, a surface treatment method of a tin-plated steel sheet by an electrolytic reaction using a phosphate compound is disclosed. In Patent Document 13, a method of performing a surface treatment on an aluminum material by an electrolytic reaction using a titanium-based compound is disclosed.

In addition, for example, in Patent Documents 14 and 15, a cathodic electrolytic treatment method of a tin or tin-based alloy-plated steel material using a chemical conversion treatment agent containing a zirconium-containing compound and a fluorine-containing compound is disclosed.

In addition, for example, in Patent Document 16, a method of performing an electrolytic treatment or other chemical conversion treatments on a tin-plated steel sheet using a treatment liquid containing phosphate ions, and at least one of titanium ions, and zirconium ions is disclosed.

In addition, for example, in Patent Document 17, a metal material having an inorganic treatment layer that contains zirconium ions and fluorine ions and does not contain phosphate ions and an organic treatment layer and a treatment method thereof are disclosed.

In addition, for example, in Patent Document 18, a method of performing an electrolytic treatment or an immersion treatment on a nickel-plated steel sheet using a treatment liquid containing zirconium ions and organic matter is disclosed. Moreover, for example, in Patent Document 19, a method of performing an electrolytic treatment or an immersion treatment on a nickel-plated steel sheet using a treatment liquid containing zirconium ions, phosphate ions, and organic matter is disclosed.

### Related Art Documents

### Patent Documents

[Patent Document 1] Japanese Patent (Granted) Publication No. 1571783
[Patent Document 2] Japanese Patent (Granted) Publication No. 1670957
[Patent Document 3] Japanese Unexamined Patent Application, First Publication No. H02-263523
[Patent Document 4] Japanese Patent (Granted) Publication No. 1601937
[Patent Document 5] Japanese Unexamined Patent Application, First Publication No. H03-236954
[Patent Document 6] Japanese Unexamined Patent Application, First Publication No. H05-124648
[Patent Document 7] Japanese Unexamined Patent Application, First Publication No. H05-111979
[Patent Document 8] Japanese Unexamined Patent Application, First Publication No. H05-147181
[Patent Document 9] Japanese Unexamined Patent Application, First Publication No. 2009-84623
[Patent Document 10] Japanese Unexamined Patent Application, First Publication No. 2000-239855
[Patent Document 11] Japanese Unexamined Patent Application, First Publication No. 2004-60052
[Patent Document 12] Japanese Unexamined Patent Application, First Publication No. 2000-234200
[Patent Document 13] Japanese Unexamined Patent Application, First Publication No. 2002-194589
[Patent Document 14] Japanese Unexamined Patent Application, First Publication No. 2005-325402
[Patent Document 15] Japanese Unexamined Patent Application, First Publication No. 2005-23422
[Patent Document 16] Japanese Unexamined Patent Application, First Publication No. S54-68734
[Patent Document 17] Japanese Unexamined Patent Application, First Publication No. 2006-9047
[Patent Document 18] Japanese Unexamined Patent Application, First Publication No. 2008-50641
[Patent Document 19] Japanese Unexamined Patent Application. First Publication No. 2009-1851

JP 2010-013728 A discloses a steel sheet for containers and a method for manufacturing the same.

### Disclosure of the Invention

### Problems to be Solved by the Invention

Certainly, the above techniques significantly contribute to the protection of the global environment. However, on the other hand, in recent years, in the beverage container market, there is strong competition in cost and quality between PET bottles, bottles, and materials such as paper. Therefore, excellent workability, weldability, film adhesion, coating material adhesion, corrosion resistance under a coating film, rust resistance, and outer appearance are demanded of both the above steel sheets for laminated containers, and of the coating of the related art.

In addition, in recent years, in Western countries, restriction of the use of hazardous substances such as lead and cadmium and consideration of working environments in manufacturing facilities have started to be demanded, and thus a film with no use of chromate and with no degradation in workability during making cans is required. In response to such circumstances, for example, in Patent Document 9 and the like, a chemical conversion treatment film which contains a zirconium compound due to an electrolytic treatment with a solution containing zirconium ions and fluorine ions is proposed.

However, since fluorine ions are contained in the solution, there may be cases where adhesion (secondary adhesion) of a coating material, a film, and the like imparted onto the film is degraded, and rust resistance or corrosion resistance under a coating film is degraded. It is thought that the cause of this problem is that fluorine ions are incorporated into the chemical conversion treatment film depending on the conditions during formation of the chemical conversion treatment film and the ions are eluted from the film during a high-temperature treatment in the presence of moisture containing steam, such as a retort treatment, or the like.

In addition, in the method described in Patent Document 11, the processes of performing immersion in the chemical conversion treatment liquid or applying the chemical conversion treatment liquid and drying the resultant have to be performed. Therefore, there are problems in that productivity is poor and satisfactory corrosion resistance that is at a degree of equal to or higher than that in the case where a chromate treatment is performed is not obtained. In addition, in Patent Document 12, the methods by the electrolytic reaction using the phosphate compound in Patent Document 12 and the titanium compound in Patent Document 13 are described. However, there is a problem in that satisfactory corrosion resistance is not obtained.

In addition, in Patent Documents 14, 15, 16, 17, 18, and 19, the methods by the electrolytic reactions containing zirconium ions and fluoride ions are described. However, even in these methods, there is a problem in that satisfactory productivity and corrosion resistance are not obtained.

In addition, in the methods of Patent Documents 14 to 19, it is described that a dense zirconium-containing film is formed in order to obtain satisfactory corrosion resistance and adhesion to an organic film such as a coating material and a film. However, in the case where a high adhesion amount of zirconium is ensured, there are problems in that the treatment may be difficult to be performed within a short time, satisfactory outer appearance is not obtained due to adhered unevenness, and sufficient adhesion to the organic film is not obtained. Regarding the conditions of an electrolytic treatment that is considered to be essential to form a dense film for obtaining good outer appearance and corrosion resistance by accelerating adhesion of zirconium and to satisfy adhesion to the organic film such as the coating material or the film, and conditions of a post-treatment, particularly, a reduction in the adhesion to the organic film such as the coating material or the film due to fluoride ions remaining in the film in the post-treatment is not mentioned. In addition, a method for solving the problems during manufacturing is not disclosed in detail.

The present invention has been made taking the foregoing circumstances into consideration, and an object thereof is to provide a steel sheet for a container having excellent workability, weldability, film adhesion, coating material adhesion, corrosion resistance under a coating film, rust resistance, and outer appearance regarding a chemical conversion treatment film on the steel sheet formed in a solution containing zirconium ions and fluorine ions even in a case where a surface treatment is performed in place of a chromate treatment, and a method of manufacturing the same.

### Means for Solving the Problems

The present invention is as follows.
(1) According to a first aspect of the present invention, a method for manufacturing a steel sheet for a container is provided, wherein the steel sheet comprises: a plated layer containing an adhesion amount of 300 to 1000 mg/m² of nickel, provided on at least one surface of a steel sheet as metal Ni; and a chemical conversion treatment film formed on the plated steel sheet wherein a metal Zr adhesion amount of the chemical conversion treatment film is 1.0 to 50 mg/m², an amount of 0.5 to 25 mg/m² of a phosphate compound is contained in terms of P amount, and an F-atom number density measured by XPS analysis of a plane of 2 nm and a plane of 4 nm in a depth direction obtained by a sputtering treatment is equal to or less than 2 at%,
   wherein the method comprises: applying a plated layer containing an adhesion amount of 300 to 1000 mg/m² of nickel as metal Ni to at least one surface of a steel sheet; forming the chemical conversion treatment film on the plated steel sheet by performing a cathodic electrolytic treatment with a solution containing ammonium hexafluorozirconate (IV), F ions, phosphate ions and nitrate ions and having a pH in the range of 3 to 4, and thereafter performing a washing treatment with warm water at 40°C or higher for 0.5 or more seconds, wherein the temperature of said solution is in the range of 10 to 50°C; and wherein in said solution the concentration of zirconium compound as concentration of zirconium metal is 100 to 3000 ppm, the concentration of HF is 50 to 400 ppm, the concentration of PO₄³⁻ is 50 to 2000 ppm and the concentration of NO₃⁻ is equal to or higher than 3000 ppm; wherein for the cathodic electrolytic treatment the electrolysis current density is 0.05 to 50 A/dm² and the current application time is 0.01 to 5 s.
(2) According to a further aspect of the present invention, a method of manufacturing the steel sheet for a container described in (1) is provided, including: performing washing with water at a temperature of equal to or higher than 20°C and equal to or less than 60°C for 0.1 or more seconds, and thereafter performing a washing treatment with warm water at 40°C or higher for 0.5 or more seconds.

### Effects of Invention

According to the steel sheet for a container, the amount of fluorine ions remaining in the film is caused to be equal to or less than a prescribed value, so that it is possible to provide a steel sheet for a container having excellent workability, weldability, film adhesion, coating material adhesion, corrosion resistance under a coating film, rust resistance, and outer appearance.

In addition, according to the method of manufacturing the steel sheet for a container, even in a case where the surface treatment is performed in place of a chromate treatment, it is possible to provide a method of manufacturing the steel sheet for a container having excellent workability, weldability, film adhesion, coating material adhesion, corrosion resistance under a coating film, rust resistance, and outer appearance.

### Brief Description of Drawings

FIG. 1 is an explanatory view showing an adhesion behavior in an electrolytic treatment of zirconium ions (the upper side in the figure) and an effect of increasing nitrate ions (the lower side in the figure).
FIG. 2 is an explanatory view showing an image of an effect of adding nitrate ions to a treatment liquid.
FIG. 3 is a graph showing an example of the relationship between an addition amount of nitrate ions and an adhesion amount of zirconium.
FIG. 4 is a diagram showing an example of the result of analysis using XPS on an effect of removing fluorine ions in a case where washing is performed with water at 25°C for 0.3 seconds (the upper side in the figure) and in a case where washing is performed with water at 40°C for 0.5 seconds (the lower side in the figure).

### Embodiments of the Invention

The inventors have intensively studied the applications of a chemical conversion treatment film containing a zirconium compound in a solution containing fluorine ions as a new film replacing a chromate film. As a result, it was found that, regarding a chemical conversion treatment film containing a zirconium compound or a chemical conversion treatment film containing a zirconium compound and a phosphate compound, a film in which the amount of fluorine ions remaining in the film is equal to or smaller than a prescribed value forms a very strong covalent bond to a coating or a laminate film, thereby obtaining better workability, weldability, film adhesion, coating material adhesion, corrosion resistance under a coating film, rust resistance, and outer appearance than those of the existing chromate film.

Hereinafter, a steel sheet for a container, having a chemical conversion treatment film formed by performing an immersion or a cathodic electrolytic treatment with a solution containing zirconium ions and fluorine ions according to an embodiment of the present invention based on the above findings, will be described in detail.

A steel sheet that is the original sheet of the steel sheet for a container is not particularly restricted, and a typical steel sheet used as a container material may be used. The manufacturing method, material, and the like of the original sheet are not particularly restricted, and the original sheet is manufactured through the processes such as hot rolling, pickling, cold rolling, annealing, and temper rolling from a typical steel piece manufacturing process.

A plated layer containing nickel is applied to the original sheet. In addition, a plated layer containing tin in addition to nickel may also be applied. The method of applying the plated layer is not particularly restricted. For example, well-known techniques such as an electroplating method, a vacuum deposition method, and a sputtering method may be used, and a heating treatment may be added after plating in order to apply a diffusion layer. In addition, nickel may be included as an Fe-Ni alloy plating which is an alloy with steel.

In the plated layer applied in this manner, the amount of nickel is 300 to 1000 mg/m² as metal Ni. In addition, in the case of containing tin, the amount of tin may be 100 to 15000 mg/m² as metal Sn.

Nickel contributes to excellent coating material adhesion, film adhesion, corrosion resistance under a coating film, and weldability. For this, an amount of 300 mg/m² or higher of nickel is needed as metal Ni. The effect of enhancing such characteristics is increased as the adhesion amount of nickel is increased. However, the enhancing effect is saturated at an amount of 1000 mg/m² or higher of nickel, which is economically disadvantageous. Therefore, the adhesion amount of nickel be equal to or less than 1000 mg/m² as metal Ni.

Tin contributes to excellent workability, weldability, and corrosion resistance under a coating film. It is preferable that an amount of 100 mg/m² or higher of tin be applied in order to ensure sufficient corrosion resistance under a coating film, an amount of 400 mg/m² or higher of tin be applied in order to ensure sufficient weldability, and an amount of 1000 mg/m² or higher of tin be applied in order to ensure sufficient workability as metal Sn. An increase in such effects may be expected as the adhesion amount of tin is increased. However, the effect of enhancing corrosion resistance under a coating film is saturated at an amount of 15000 mg/m² or higher of tin, which is economically disadvantageous. Therefore, it is preferable that the amount of tin adhered be equal to or less than 15000 mg/m² as metal Sn. In addition, a tin-alloyed layer is formed by performing a reflow treatment after tin plating, so that corrosion resistance under a coating film is further enhanced.

Here, the amounts of metal Ni and metal Sn contained in the plated layer may be measured by, for example, an X-ray fluorescence method. In this case, using a nickel adhesion sample of which the amount of metal Ni is known, a calibration curve regarding the metal Ni amounts is specified in advance, and a metal Ni amount is relatively specified using the calibration curve. Similarly, in the case of the metal Sn amounts, using a tin adhesion sample of which the amount of metal Sn is known, a calibration curve regarding the metal Sn amounts is specified in advance, and a metal Sn amount is relatively specified using the calibration curve.

In the steel sheet for a container according to this embodiment, a chemical conversion treatment film is formed at the upper layer of the plated layer described above. The chemical conversion treatment film may be formed by an immersion treatment of immersing a steel sheet into a chemical conversion treatment solution having zirconium ions, fluorine ions, and moreover phosphate ions dissolved, by a cathodic electrolytic treatment. Here, during the immersion treatment, various kinds of films are formed by etching the substrate, and thus the adhered films become non-uniform. In addition, the treatment time is lengthened, which is disadvantageous in industrial productivity. On the other hand, during the cathodic electrolytic treatment, by a surface cleaning effect due to the forced movement of charges and hydrogen generation at the interface between the steel sheet and an electric field treatment solution and by an adhesion acceleration effect due to a pH increase, a uniform film may be obtained. In addition, in the cathodic electrolytic treatment, by causing nitrate ions and ammonium ions to coexist in the treatment liquid, it is possible to accelerate precipitation of the chemical conversion treatment film containing zirconium oxides or a zirconium phosphate compound having an excellent effect of enhancing corrosion resistance under a coating film, coating material adhesion, and film adhesion in a treatment performed within a short time of several to tens of seconds, which is industrially extremely advantageous. Therefore, the cathodic electrolytic treatment is used according to the present invention to apply the chemical conversion treatment film, performed in a treatment liquid in which nitrate ions and ammonium ions coexist. In addition, the cathodic electrolytic treatment may be performed at a current density of, for example, 0.1 to 20 A/dm².

As such, the chemical conversion treatment film provides excellent practical characteristics (mainly corrosion resistance under a coating film, film adhesion, and coating material adhesion). However, in a case where an adhesion amount of 3.0 mg/m² or higher of carbon in terms of carbon amount is applied to the chemical conversion treatment film using a phenolic resin, there are concerns that deterioration of weldability due to an increase in electrical resistance or adhesion unevenness may occur and the film may be washed away and peeled off by a washing process after an electrolytic treatment described later, so that it is preferable that the phenolic not be applied.

The main role of the chemical conversion film is to ensure corrosion resistance under a coating film, coating material adhesion, and film adhesion. It is thought that a zirconium compound such as zirconium oxide, hydrous zirconia including zirconium hydroxide, and a compound of hydrous zirconia and phosphate provides excellent corrosion resistance under a coating film, coating material adhesion, and film adhesion. Therefore, when the amount of zirconium compound in the chemical conversion treatment film is increased, such characteristics begin improving, and at an adhesion amount of 1.0 mg/m² or higher of zirconium in terms of metal zirconium amount, corrosion resistance under a coating film and coating material adhesion at a level with no problem in practice are ensured. On the other hand, when the amount of zirconium compound exceeds 50 mg/m² in terms of metal zirconium amount, the chemical conversion treatment film becomes too thick, adhesion of the chemical conversion film itself is deteriorated, and electrical resistance is increased, resulting in deterioration of weldability. Therefore, the amount of zirconium compound is 1.0 to 50 mg/m² in terms of metal zirconium amount. The lower limit of the amount of zirconium compound is more preferably equal to or higher than 2.0 mg/m² and even more preferably equal to or higher than 5.0 mg/m², and the upper limit of the adhesion amount of zirconium is more preferably equal to or less than 40 mg/m² and even more preferably equal to or less than 25 mg/m².

In addition, more excellent corrosion resistance under a coating film, film adhesion, and coating material adhesion are achieved when the phosphate compound is increased in amount in the chemical conversion treatment film, and the effect is apparently perceived when the amount of phosphorus is equal to or higher than 0.5 mg/m². Moreover, when the amount of phosphate compound is increased, the effect of enhancing corrosion resistance under a coating film, film adhesion, and coating material adhesion is increased. However, when the amount of phosphate compound exceeds 25 mg/m² in terms of phosphorus amount, the phosphate compound becomes too thick, adhesion of the chemical conversion treatment film itself is deteriorated, and electrical resistance is increased, resulting in deterioration of weldability. Therefore, the adhesion amount of phosphate compound is 0.5 to 25 mg/m² in terms of phosphorus amount. The lower limit of the amount of phosphate compound is more preferably equal to or higher than 2.5 mg/m² and even more preferably equal to or higher than 5 mg/m², and the upper limit of the amount of phosphate compound is more preferably equal to or less than 20 mg/m² and even more preferably equal to or less than 12.5 mg/m².

Fluorine ions are contained in the solution and thus are incorporated into the film along with the zirconium compound. Fluorine in the film does not have an effect on the typical adhesion of a coating material or a film (primary adhesion), but causes deterioration of adhesion during a high-temperature sterilization treatment such as a retort treatment (secondary adhesion), rust resistance, or corrosion resistance under a coating film. It is thought that this is caused by fluorine that is eluted from the film to steam or a corrosion liquid and decomposes a bond to an organic film or corrodes the substrate steel sheet. It is preferable that, regarding the fluorine amount in the outermost surface of the film, the surface F-atom number density converted from a peak area in the vicinity of 682 to 688 eV focusing on 684 eV which is a binding energy corresponding to F1s in XPS analysis of the corresponding film (X-ray photoelectron spectroscopy) be equal to or less than 2 at%. The same regulation applies to a new surface in the vicinity of the outermost surface obtained by sputtering in the depth direction of the film (a surface with a depth of 2 nm and a depth of 4 nm from the outermost surface). When the surface F-atom number density exceeds 2 at%, deterioration of such characteristics starts to occur, so that the F-atom number density of the plane with a depth of 2 nm and a depth of 4 nm from the outermost surface is equal to or less than 2 at%. The surface F-atom number density is more preferably equal to or less than 1 at%, and even more preferably equal to or less than 0.5 at%.

The lower limit of the surface F-atom number density may be higher than 0 at% because it is preferable that the fluorine amount be reduced as much as possible. However, it is industrially difficult to reduce the surface F-atom number density to be equal to or less than 0.3 at%, so that the lower limit thereof may be set to 0.2 at% or 0.3 at%.

In order to cause the surface F-atom number density to be equal to or less than 2 at%, after the chemical conversion treatment film is formed, the film may be subjected to a washing treatment by an immersion treatment in warm water or by a spraying treatment. The F amount may be reduced by increasing the treatment temperature or increasing the treatment time. Therefore, in order to cause the surface F-atom number density of the film to be equal to or less than 2 at%, the film may be subjected to an immersion treatment or a spraying treatment in warm water at 40°C or higher for 0.5 or more seconds. When the water temperature is lower than 40°C or the treatment time is lower than 0.5 seconds, the surface F-atom number density of the film may not achieve 2 at% or less, so that the above-described characteristics may not be achieved.

In addition, it is possible to measure the metal zirconium amount and the phosphorus amount contained in the chemical conversion treatment film by, for example, a quantitative analysis method such as X-ray fluorescence analysis.

Hereinafter, a method of manufacturing the steel sheet for a container described above will be described in detail with reference to the accompanying drawings.

The inventors have intensively studied a method of forming a film containing zirconium on the surface of a steel sheet in a cathodic electrolytic treatment using a solution containing zirconium ions, fluorine ions, and phosphate ions. As a result, it was found that, when nitrate ions are added to an electrolytic treatment liquid of which the concentration of each ion component is specified, a film containing zirconium at a high adhesion amount of zirconium with excellent outer appearance may be formed within a short time. Moreover, the inventors found that a chemical conversion treatment film from which particularly fluorine ions are removed may be obtained by performing washing with warm water after the electrolytic treatment, and accordingly a steel sheet for container having excellent workability, weldability, film adhesion, coating material adhesion, corrosion resistance under a coating film, rust resistance, and outer appearance may be manufactured.

### [Method of Manufacturing Steel Sheet for Container]

In the method of manufacturing the steel sheet for a container, a chemical conversion treatment liquid which contains an amount of 100 ppm to 3000 ppm of zirconium ions, an amount of 50 ppm to 400 ppm of hydrogen fluoride, and amount of 50 ppm to 2000 ppm of phosphate ions and has a pH of 3 to 4 and a temperature of 20°C to 50°C is used. This chemical conversion treatment liquid also contains an amount of 3000 ppm or higher of nitrate ions. The cathodic electrolytic treatment is performed on the steel sheet using the chemical conversion treatment liquid, and thereafter, a washing treatment is performed with warm water of 40°C or higher for 0.5 or more seconds. Accordingly, a steel sheet for a container in which a chemical conversion treatment film containing a zirconium compound and a phosphate compound is formed on at least one surface of the steel sheet is manufactured. Hereinafter, the method of manufacturing the steel sheet for a container according to this embodiment will be described in detail.

### (Types of Steel Sheets)

A steel sheet that is the original sheet of the steel sheet for a container is not particularly restricted, and a typical steel sheet used as a container material may be used. The manufacturing method, material, and the like of the original sheet are not particularly restricted, and the original sheet may be manufactured through the processes such as hot rolling, pickling, cold rolling, annealing, and temper rolling from a typical steel piece manufacturing process and may be provided with a metal surface treatment layer such as a chemical conversion treatment layer or a plated layer on the surface of the steel sheet. The method of applying the surface treatment layer is not particularly restricted and may use, for example, well-known methods such as an electroplating method, a vacuum deposition method, and a sputtering method. A heating treatment for applying a diffusion layer may also be added.

In addition, at least one surface of the steel sheet is provided with a nickel-containing plated layer as the surface treatment layer in order to ensure mainly corrosion resistance under a coating film, and a chemical conversion treatment film may be formed on the nickel-containing plated layer. Nickel is high corrosion-resistant material, so that corrosion resistance under a coating film may further be enhanced by plating the surface of the steel sheet with nickel. As the method of providing the nickel-containing plated layer to the surface of the steel sheet, for example, any of a dry plating method such as a vacuum deposition method or a sputtering method and a wet plating method such as an electroplating method or an electroless plating method may be used, and the method is not particularly limited. In addition, an Fe-Ni alloy-plated layer may be provided by alloying nickel with iron.

The effect of enhancing coating material adhesion, film adhesion, corrosion resistance under a coating film, and weldability due to the nickel-containing plating is determined by the amount of plated nickel, and when the amount of nickel in the plated layer is equal to or higher than 10 mg/m², the effect of enhancing such characteristics is manifested. However, in order to sufficiently ensure such characteristics, the amount of nickel in the nickel-containing plated layer is equal to or higher than 300 mg/m². On the other hand, although the effect of enhancing corrosion resistance is increased as the amount of nickel in the nickel-containing plated layer is increased, when the amount of nickel exceeds 1000 mg/m², the effect of enhancing corrosion resistance is saturated. In addition, since nickel is an expensive metal, plating with an amount of higher than 1000 mg/m² of nickel is economically disadvantageous. Therefore, the amount of nickel in the nickel-containing plated layer is equal to or less than 1000 mg/m².

Here, the amount of metal Ni in the plated layer may be measured by an X-ray fluorescence analysis method. In this case, using a nickel adhesion sample of which the amount of metal Ni is known, a calibration curve regarding the metal Ni amounts is specified in advance, and a metal Ni amount is relatively specified using the calibration curve.

In addition, the plated layer is not only formed of only pure Ni metal but also formed of an Fe-Ni alloy as long as the nickel amount is in a range of equal to or higher than 300 mg/m². In addition, a nitriding treatment may be performed on the steel sheet for the purpose of enhancing the mechanical strength, and in a case where a plated layer is formed on the steel sheet subjected to the nitriding treatment, an effect obtained by the nitriding treatment such as an effect of rarely generating wear and deformation even though the thickness of the steel sheet is reduced is not reduced.

In addition, a heating treatment for applying a diffusion layer may be performed after forming the plated layer. Moreover, for example, in a case where the plated layer is formed by a diffusion plating method, a diffusion treatment for forming a diffusion layer is performed in an annealing furnace after performing nickel plating on the surface of the steel sheet. The nitriding treatment may be performed before or after the diffusion treatment or simultaneously with the diffusion treatment.

It is preferable that the plated layer be formed on both surfaces of the steel sheet from the viewpoint of the enhancement of corrosion resistance under a coating film. However, in a case where a surface treatment or the like other than the nickel plating is performed on one surface of the steel sheet to enhance corrosion resistance from the viewpoint of a reduction in manufacturing cost, the plated layer may be formed at least on the other surface of the steel sheet (a surface reverse to the surface subjected to the surface treatment or the like). As such, in the case where the steel sheet for a container in which the plated layer is formed only on one surface of the steel sheet is subjected to a can manufacturing process, for example, the steel sheet for a container is processed so that the surface where the plated layer is formed becomes the inner surface side of the container.

In addition, the plated layer may also contain tin.

### (Regarding Method of Applying Chemical Conversion Treatment Film)

The chemical conversion treatment film according to this embodiment is formed on the plated layer as described above.

The chemical conversion treatment film is formed of a chemical conversion treatment liquid containing a zirconium component, a fluorine compound, and a phosphate compound. As the phosphate component is applied to the chemical conversion treatment film by containing the phosphate compound in the chemical conversion treatment liquid, corrosion resistance under a coating film, film adhesion, and coating material adhesion may further be enhanced compared to those of a chemical conversion treatment film without a phosphate component contained.

The zirconium component imparts corrosion resistance under a coating film and film adhesion to the chemical conversion treatment film. It is thought that the chemical conversion treatment film containing the zirconium component is formed as a composite film of a zirconium compound having zirconium oxide and hydrous zirconia such as zirconium hydroxide.

Moreover, in the case of adding phosphate, a composite film is formed of zirconium phosphate. In particular, the chemical conversion treatment film provides excellent corrosion resistance under a coating film and film adhesion, and the inventors thought the reason for this is as follows. That is, it is thought that, regarding corrosion resistance under a coating film, the chemical conversion treatment film forms a three-dimensional cross-linked structure by a polymer-like zirconium complex as shown in Chem. 1 as follows, and corrosion resistance is provided by barrier properties of the cross-linked structure. In addition, it is thought that, regarding adhesion, as a hydroxyl group existing in the chemical conversion treatment film or a hydroxyl group of a phosphate group, and a hydroxyl group existing on the metal surface such as the steel sheet are dehydrated and condensed, the metal surface and the chemical conversion treatment film having the zirconium component form a covalent bond via an oxygen atom, thereby providing adhesion.

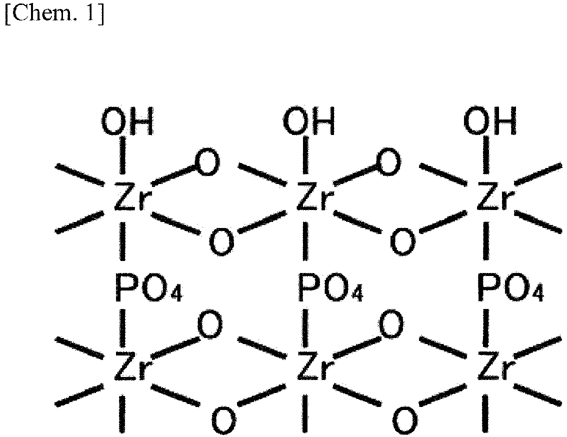

Specifically, when the adhesion amount of zirconium of the chemical conversion treatment film becomes equal to or higher than 1.0 mg/m² in terms of metal Zr amount, corrosion resistance under a coating film and film adhesion at a level with no problem in practice are ensured. The effect of enhancing corrosion resistance under a coating film and film adhesion is increased as the adhesion amount of zirconium is increased. However, when the adhesion amount of zirconium exceeds 50 mg/m² in terms of metal Zr amount, degradation of the outer appearance due to adhesion unevenness is caused, and the chemical conversion treatment film becomes too thick. Therefore, cohesive failure is caused during processing, adhesion of the chemical conversion treatment film itself, adhesion to the coating material, and adhesion to the film are degraded, and electrical resistance is increased, resulting in deterioration of weldability. In addition, in a case where the adhesion amount of zirconium of the chemical conversion treatment film exceeds 50 mg/m² in terms of metal Zr amount, a film which is insufficiently adhered although being precipitated may be washed away (peeled off) during the washing process after the electrolytic treatment. Therefore, it is preferable that the adhesion amount of zirconium of the chemical conversion treatment film in the steel sheet for a container according to this embodiment be 1.0 mg/m² to 50 mg/m² in terms of metal Zr amount. Moreover, preferably, the adhesion amount of zirconium is 5.0 mg/m² to 30 mg/m² in terms of metal Zr amount. By causing the adhesion amount of zirconium to be in a range of 10 mg/m² to 30 mg/m², corrosion resistance after the retort treatment may be ensured, and small adhesion unevenness may be reduced.

In addition, the chemical conversion treatment film contains the phosphate compound in addition to the zirconium component as described above.

The chemical conversion treatment film having the zirconium component and the phosphate component is formed to ensure corrosion resistance under a coating film and film adhesion. The chemical conversion treatment film is formed as a film made of a phosphate compound such as zirconium phosphate or phenyl phosphate or a composite film made of two or more kinds of phosphate compounds. Such a chemical conversion treatment film has excellent corrosion resistance and film adhesion. The inventors thought that the reason for this is that phosphate ions are complexed with various kinds of zirconium ions to form a three-dimensional cross-linked structure film as described above, and metal ions are insolubilized by forming a phosphate compound even though metal ions such as iron or nickel are eluted (a first stage of corrosion), thereby providing an effect of reducing new corrosion.

Specifically, when the adhesion amount of phosphorus of the chemical conversion treatment film having the zirconium component and the phosphate component becomes equal to or higher than 0.5 mg/m², corrosion resistance under a coating film and film adhesion at a level with no problem in practice are ensured. On the other hand, the effect of enhancing corrosion resistance under a coating film and film adhesion is increased as the adhesion amount of phosphorus is increased. However, when the adhesion amount of phosphorus exceeds 25 mg/m², the chemical conversion treatment film becomes too thick, and thus cohesive failure is caused during processing or the like, so that adhesion of the chemical conversion treatment film itself, coating material adhesion, and film adhesion are degraded and electrical resistance is increased, resulting in deterioration of weldability. In addition, when the adhesion amount of phosphorus exceeds 25 mg/m², there may be cases where adhesion unevenness of the film is manifested as unevenness of the outer appearance, and a film which is insufficiently adhered although being precipitated is washed away (peeled off) during the washing process after the electrolytic treatment. Therefore, it is preferable that the adhesion amount of phosphorus of the chemical conversion treatment film in the steel sheet for a container according to this embodiment be 0.5 mg/m² to 25 mg/m². Even more preferably, the adhesion amount of phosphorus is 2 mg/m² to 13 mg/m². By causing the adhesion amount of the phosphate film to be in a range of 2 mg/m² to 13 mg/m², corrosion resistance under a coating film and corrosion resistance after the retort treatment may be ensured, and small adhesion unevenness may be reduced.

### (Method of Measuring Content of each Component in Chemical Conversion Treatment Film)

It is possible to measure the amounts of metal zirconium, phosphorus, and fluorine contained in the chemical conversion treatment film according to this embodiment by, for example, a quantitative analysis method such as X-ray fluorescence analysis. In addition, it is possible to obtain the amount of carbon in the chemical conversion treatment film by deducting the amount of carbon contained in the steel sheet as a background from a value measured by, for example, a total carbon amount measurement method through gas chromatography.

As described above, in the steel sheet for a container according to this embodiment, the chemical conversion treatment film containing at least the zirconium component is formed on at least one surface of the steel sheet, so that excellent workability, weldability, film adhesion, coating material adhesion, corrosion resistance under a coating film, rust resistance, and outer appearance may be imparted.

### [Method of Manufacturing Steel Sheet for Container according to this Embodiment]

The configuration of the steel sheet for a container according to this embodiment has been described above. Next, a manufacturing method for obtaining the steel sheet for a container will be described in detail.

### (Employment of Low-Temperature Cathodic Electrolysis)

In the method of manufacturing the steel sheet for a container according to this embodiment, a low-temperature cathodic electrolytic treatment is performed at 10°C to 50°C in order to form a dense film on the steel sheet and ensure corrosion resistance under a coating film, thereby forming a chemical conversion treatment film as described above on at least one surface of the steel sheet. Examples of the method of forming the chemical conversion treatment include a method of immersing the steel sheet into a chemical conversion treatment solution in which zirconium ions, phosphate ions, and the like are dissolved, a method of performing a cathodic electrolytic treatment using such a chemical conversion treatment solution, and the like.

Here, in the treatment method using the immersion, the steel sheet which is the substrate of the chemical conversion treatment film or the plated layer formed on the surface of the steel sheet is etched, thereby forming various kinds of films. Therefore, the adhesion amount of the chemical conversion treatment film becomes non-uniform, and a treatment time needed to form the chemical conversion treatment film is lengthened, which is industrially disadvantageous.

On the other hand, in the method using the cathodic electrolytic treatment, by a surface cleaning effect due to the forced movement of charges and hydrogen generation at the interface of the steel sheet and by an adhesion acceleration effect due to an increase in hydrogen ion concentration (pH), a uniform film may be formed by a short-time treatment performed for about several seconds (including cases which take about 0.01 seconds in practice), which is industrially extremely advantageous. Therefore, in the method of manufacturing the steel sheet for a container according to the present invention, the chemical conversion treatment film may be formed by the cathodic electrolytic treatment.

### (Overall Components of Chemical Conversion Treatment Liquid used in Cathodic Electrolytic Treatment)

Here, in order to form the chemical conversion treatment film by the cathodic electrolytic treatment, it is necessary to determine components in the chemical conversion treatment liquid used in the electrolytic treatment depending on the components contained in the chemical conversion treatment film described above.

As zirconium compounds, there are H₂ZrF₆, a salt of H₂ZrF₆, Zr(NO₃)₄, ZrO(NO₃)₂, ZrF₄, ZrO₂, and the like. According to claim 1, it is used an ammonium salt of H₂ZrF₆ because of high solubility in water since, for example, diluted water is used as a solvent of the chemical conversion treatment liquid and of ammonium nitrate added as fluoride ions and nitrate ions. During ion supply in a continuous treatment, Zr(NO₃)₄, and ZrO(NO₃)₂ are preferably used.

Regarding the concentrations of the zirconium compound, the concentration of a zirconium metal element is 100 ppm to 3000 ppm, or 500 ppm to 1500 ppm. In the case where the concentration in the zirconium compound is lower than 100 ppm, degradation of a film component concentration is caused, an electrolytic treatment time to obtain an adequate adhesion amount for obtaining performance such as corrosion resistance under a coating film, coating material adhesion, and film adhesion is lengthened, and it becomes difficult to ensure an electrical conductivity (EC), resulting in restricted electrolysis conditions. Therefore, although depending on power supply performance there may be cases where it is difficult to perform stable manufacturing. In addition, in a case where the concentration is higher than 3000 ppm, it is difficult to uniformly adhere the film to the steel sheet or the plated steel sheet during the electrolytic treatment, and as a result, adhesion unevenness is more likely to occur and the outer appearance of the surface is degraded, which is not preferable.

### (Regarding Addition of Hydrogen Fluoride)

Hydrogen fluoride is added to the chemical conversion treatment liquid. Although an ammonium salt of H₂ZrF₆ is used as the zirconium compound in the above-described embodiment, complex ions due to the fluoride ions are necessarily stable. Although the complex ions are stable at pH 4 or less, the complex ions become unstable at a pH of higher than 4. In this manner, the complex ions cause hydrolysis due to change in pH, temperature change, coexisting metal ions, inclusion, and the like, so that zirconium irreversibly becomes oxides, hydroxides, and metallic salts which are insoluble in water and are precipitated in the chemical conversion treatment liquid. By adding hydrogen fluoride, fluoride ions are present in the chemical conversion treatment liquid, so that it becomes possible to stabilize the zirconium compound. As a supply source of free fluorine compound ions added, hydrogen fluoride that does not contain different metal ions is used.

The concentration of hydrogen fluoride may be 50 ppm to 400 ppm, and preferably, 75 ppm to 250 ppm. In addition, the concentration of hydrogen fluoride represents the amount of added hydrogen fluoride. At a concentration of less than 50 ppm, ensuring stability becomes difficult due to long-term treatment, change in pH, temperature change, coexisting metal ions, and the like. In addition, in a case where the concentration exceeds 400 ppm, response during the electrolytic treatment becomes significantly slow, and thus a long electrolytic time is needed, which is not practical. In the case where phosphate ions are caused to coexist with zirconium ions, it is preferable that the concentration of hydrogen fluoride be a concentration of about 100 ppm.

### (Regarding Phosphate Ions)

An amount of 50 ppm to 2000 ppm of phosphate ions is contained in the chemical conversion treatment liquid. Phosphate ions are added as a main constituent component of the chemical conversion treatment film, have a pH buffering action for the chemical conversion treatment liquid, and contribute to stabilization of the electrolytic treatment. As a supply source of phosphate ions added, phosphate that does not contain different metal ions (other name: orthophosphate) is preferable.

In the case where the concentration of phosphate ions is lower than 50 ppm, degradation of a film component concentration is caused, the electrolytic treatment time needed to obtain an adequate adhesion amount for obtaining the effect of adding phosphate ions, that is, performance such as corrosion resistance, coating material adhesion, and film adhesion is lengthened, and it becomes difficult to ensure an electrical conductivity (EC), resulting in restricted electrolysis conditions. Therefore, although depending on power supply performance, there may be cases where it is difficult to perform stable manufacturing. In addition, in the case where the concentration of phosphate ions is higher than 2000 ppm, insoluble matter that is considered to be made of zirconium and phosphate is more likely to be generated in the chemical conversion treatment liquid at an amount of 100 ppm to 3000 ppm of zirconium ions. In addition, it is difficult to uniformly adhere the film to the steel sheet or the plated steel sheet during the electrolytic treatment, and as a result, adhesion unevenness is more likely to occur and the outer appearance of the surface is degraded, which is not preferable.

### (Regarding Nitrate Ions)

In addition to zirconium ions, free fluorine compound ions (fluorine ions), and phosphate ions, nitrate ions may be added to the chemical conversion treatment liquid.

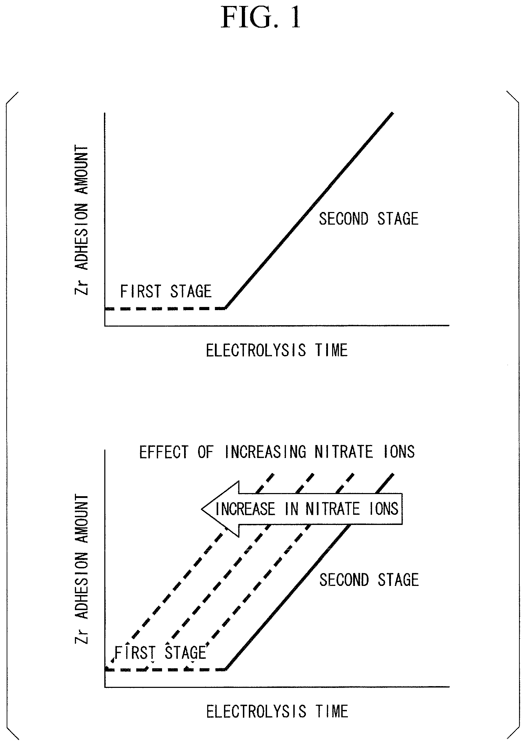

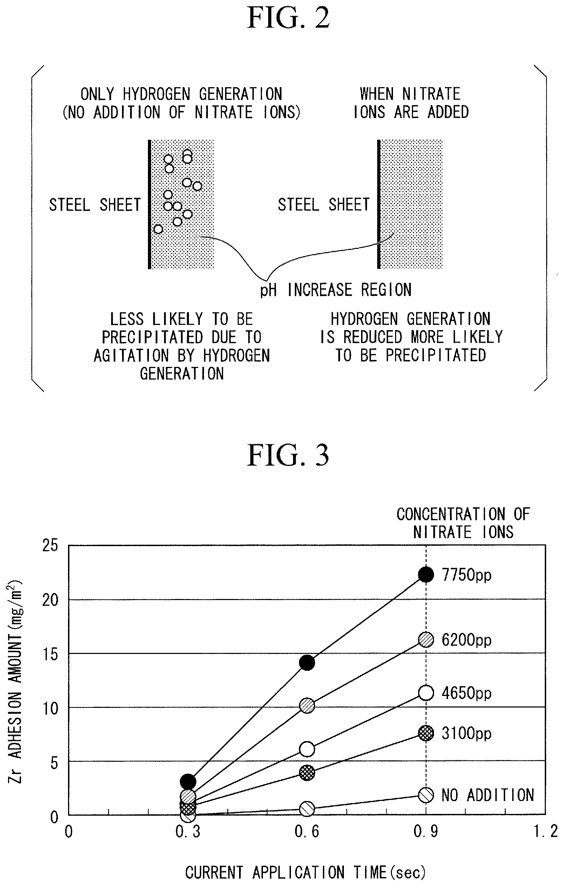

As shown in FIG. 1, it is seen that the adhesion behavior of zirconium ions in the electrolytic treatment is formed in two stages including a stage in which zirconium is less likely to be precipitated in the electrolytic treatment (first stage) and a stage in which zirconium is precipitated in the electrolytic treatment. In order to achieve a high-speed treatment, it is necessary to reduce the time for the stage in which zirconium is less likely to be precipitated (first stage). As a result of the examination, it was found that the above-described time for the stage in which zirconium is less likely to be precipitated (first stage) is reduced as the amount of nitrate ions added to the electrolytic treatment liquid is increased. The inventors estimate the effect of adding nitrate ions as follows. By adding nitrate ions to the electrolytic treatment liquid to reduce the time, electrical conductivity may be increased without a change in pH, thereby adjusting the electrical conductivity in an appropriate range for the apparatus. As the electrical conductivity is increased, current supplied to electrodes and the steel sheet is stabilized, so that it becomes possible to perform a uniform electrolytic treatment on the steel sheet and the surface of the plated steel sheet (overall surface). In addition, an effect of increasing wettability of the steel sheet and the surface of the plated steel sheet is obtained, thereby obtaining the same effect. Moreover, as shown in FIG. 2, it is thought that by performing the electrolytic treatment on the steel sheet and the plated steel sheet by adding nitrate ions to the treatment liquid, in the steel sheet and the surface of the plated steel sheet subjected to the electrolytic treatment at the cathodes, not only a hydrogen generation reaction (2H₂O+4e⁻→H₂+2OH⁻), but also a reduction reaction (NO₃⁻+H₂O+2e⁻→NO₂+2OH⁻, NO₂⁻+5H₂O+2e⁻→NH₃+5OH⁻, and the like) in which nitrate ions themselves are oxidized occur. Originally, due to the hydrogen generation, the pH of the steel sheet and the surface of the plated steel sheet is increased and thus a film mainly containing the zirconium compound is formed. At the same time, on the other hand, agitation due to the hydrogen generation impedes precipitation of the zirconium compound and formation of the film. When nitrate ions are added, the hydrogen generation as described above is reduced and at the same time, the pH is increased, thereby stabilizing precipitation of the zirconium compound and formation of the film. As a result, adhesion unevenness of the chemical conversion treatment film is significantly reduced, and formation of the corresponding film is significantly accelerated.

As a supply source of the added nitrate ions, nitrate and nitrate salt may be used, and as a compound that can stably supply nitrate ions without a significant change in the pH, ammonium nitrate is particularly preferable. In addition, during ion supply in a continuous treatment, as nitrate ions, Zr(NO₃)₄, ZrO(NO₃)₂, H₂ZrF₆, an ammonium salt of H₂ZrF₆ are preferably used.

By causing the concentration of nitrate ions to be equal to or higher than 3000 ppm as shown in FIG 3, the adhesion amount of zirconium may be ensured within a short time, and moreover, the adhesion unevenness of the zirconium film may be reduced. From this viewpoint, the upper limit of the concentration of nitrate ions is not particularly limited, and it is preferable that the upper limit thereof be set to be in a range of equal to or higher than 3000 ppm according to the balance between a required adhesion amount of zirconium and a treatment time restricted by the apparatus, manufacturing cost, and the like. In addition, during the setting of the concentration of nitrate ions, it is preferable to consider the treatment facilities for reducing an environmental burden due to waste liquid (restriction of liquid disposal during waste liquid treatment, and restriction of the total amount of nitrogen during disposal of nitrate nitrogen and ammoniacal nitrogen), and cost.

### (Tannate)

In addition, tannate may be added to the chemical conversion treatment solution used as the chemical conversion treatment liquid of the cathodic electrolytic treatment. By adding tannate to the chemical conversion treatment liquid as such, tannate is bonded to Fe atoms of the surface of the steel sheet, so that a film of iron tannate is formed on the surface of the steel sheet, thereby enhancing rust resistance and adhesion. Therefore, in a case where the steel sheet for a container is used for the purpose of rust resistance and adhesion, as necessary, formation of the chemical conversion treatment film may be performed in a chemical conversion treatment solution to which an amount of 700 ppm or higher, preferably, 900 ppm or higher, and more preferably 1100 ppm or higher of tannate is added.

### (Solvent used in Chemical Conversion Treatment Solution)

In addition, as the solvent of the chemical conversion treatment solution used for formation of the chemical conversion treatment film according to the present invention, for example, deionized water, diluted water, and the like may be used. The electrical conductivity is preferably equal to or less than 10 µS/cm, more preferably equal to or less than 5 µS/cm, and even more preferably equal to or less than 3 µS/cm. However, the solvent of the chemical conversion treatment solution is not limited to this and may be appropriately selected depending on dissolved materials, formation methods, formation conditions of chemical conversion treatment films, and the like. Here, it is preferable to use the above-mentioned deionized water or diluted water in terms of stable industrial productivity based on stability of the adhesion amount of each component, cost, and environment.

### (pH of Chemical Conversion Treatment Solution)

The pH of the chemical conversion treatment solution used for forming the chemical conversion treatment film is in a range of 3 to 4 from the viewpoint of ensuring stability of the chemical conversion treatment liquid. Zr-F complex ions such as H₂ZrF₆ and an ammonium salt of H₂ZrF₆ used as the supply source of zirconium are stable in the chemical conversion treatment solute ion of a pH of 4.5 or less. However, Zr-F complex ions become Zr⁴⁺ due to a hydrolysis reaction at a pH of 4.5 or higher to be present in the chemical conversion solution. Such zirconium ions more rapidly react with the chemical conversion treatment liquid and become ZrO₂, and in a case where phosphate ions are present, form a compound such as Zr₃(PO₄)₄, Zr(HPO₃)₂, and the like. Such products are insoluble in water or the like and have a property of not being dissolved even when pH is reduced. As a result, the chemical conversion treatment liquid becomes cloudy and the component ion balance is lost. On the other hand, in a case of a low pH, Zr-F complex ions are stable, and thus stability of the chemical conversion treatment liquid may be ensured. However, the hydrolysis reaction slows down due to the increase in pH at the steel sheet or the surface of the plated steel sheet, that is, at the cathodic electrode interface, and response during the electrolytic treatment becomes significantly slow and thus a long electrolysis time is needed, which is not practical. From the above aspects, the pH of the chemical conversion treatment solution needs to be in a range of 3 to 4 and is preferably 3.3 to 3.8. In addition, in order to adjust the pH to be in the corresponding range, nitrate is appropriately used in a case of reducing the pH, and ammonia water is appropriately used in a case of increasing the pH.

### (Temperature of Chemical Conversion Treatment Solution)

The temperature of the electrolytic treatment of the chemical conversion treatment solution used for forming the chemical conversion treatment film is in a range of 10°C to 50°C. This is for ensuring stability of the chemical conversion treatment liquid and for ensuring the performance of the obtained chemical conversion treatment film. There may be cases where the Zr-F complex ions become unstable at a temperature of higher than 50°C, and the Zr-F complex ions in the chemical conversion treatment liquid become ZrO₂ and thus become insoluble matter, so that the ion balance is lost. By performing the cathodic electrolytic treatment at a low temperature of equal to or less than 50°C, it becomes possible to form a dense and uniform film structure formed of very fine particles. In addition, when the temperature of the chemical conversion treatment liquid exceeds 50°C, there may be cases where the formed film structure becomes non-uniform, resulting in generation of film defects, film cracks, and microcracks. In this case, formation of the dense film is difficult and the defects and cracks become starting points of corrosion and the like. On the other hand, when the temperature of the chemical conversion treatment liquid is less than 10°C, film formation efficiency is poor, and cooling is needed when the temperature of external air is high, for example, in summer, which is not economical.

### (Regarding Treatment Conditions of Cathodic Electrolytic Treatment)

According to claim 1, the cathodic electrolytic treatment is performed at an electrolysis current density of 0.05 A/dm² to 50 A/dm². In a case where the electrolysis current density is less than 0.05 A/dm², a reduction in the film adhesion amount is caused, stable formation of the film is difficult, and a longer electrolytic treatment time is needed, resulting in reductions in productivity, corrosion resistance, coating adhesion, and the like. On the other hand, in a case where the electrolysis current density exceeds 50 A/dm², the film adhesion amount becomes higher than a required amount and is saturated. Therefore, depending on the cases, a film which is insufficiently adhered is washed away (peeled off) in the washing process with warm water after the electrolytic chemical conversion treatment, which is not economical. In addition, an increase in the temperature of the chemical conversion treatment liquid is caused during the electrolytic treatment, so that there may be cases where cooling of the chemical conversion treatment liquid is needed in order to maintain the temperature conditions of the low-temperature cathodic electrolytic treatment described above.

In addition, according to claim 1, the cathodic electrolytic treatment is performed for a current application time of 0.01 seconds to 5 seconds. In the case where the current application time is shorter than 0.01 seconds, a reduction in the film adhesion amount is caused, and stable formation of the film is difficult, resulting in reductions in corrosion resistance, coating adhesion, and the like. On the other hand, in the case where the current application time exceeds 5 seconds, the film adhesion amount becomes higher than a required amount and the adhesion amount is saturated. Therefore, depending on the cases, a film which is insufficiently adhered is washed away (peeled off) in the washing process such as water washing after the electrolytic chemical conversion treatment, which is not economical. In addition, an increase in the temperature of the chemical conversion treatment liquid is caused, so that there may be a case where an additional treatment such as cooling of the chemical conversion treatment liquid is needed in order to maintain the temperature conditions of the low-temperature cathodic electrolytic treatment described above.

Moreover, the cathodic electrolytic treatment may be performed while the electrolytic treatment liquid is under either a standstill condition or a flow condition with respect to the steel sheet and the plated steel sheet. However, it is preferable that the cathodic electrolytic treatment be performed under the flow condition in a case where the ions of adhesion components in the electrolytic treatment liquid are a diffusion control and thus a required adhesion amount cannot be ensured within a short time.

Moreover, it is preferable that, regarding the cathodic electrolytic treatment, the electrolytic treatment be intermittently performed, that is, performed by repeating current application and suspension. Accordingly, it becomes possible to gradually form a dense film, resulting in a reduction in adhesion unevenness. Specifically, in a case where the total current application time is set to, for example, 1 second, compared to a case where the current application treatment is performed once for 1.0 seconds, uniform films may be formed when the current application treatment is performed twice for 0.5 seconds for each treatment and is performed four times for 0.25 seconds for each treatment. In addition, it becomes possible to ensure a high adhesion amount of zirconium in proportion to the number of current applications. In a case of a batch type treatment, repeating ON and OFF of the current application to the electrodes becomes possible. In addition, in a case where a long steel sheet is subjected to a continuous treatment, a plurality of tanks provided with electrodes are prepared, and it becomes possible to form the dense films by passing the plate through the plurality of tanks in the longitudinal direction (electrode multi-pass treatment).

### (Regarding Washing after Cathodic Electrolytic Treatment)

After the cathodic electrolytic treatment, a washing treatment is performed with warm water at 40°C or higher for 0.5 or more seconds. Specifically, a washing treatment of the electrolytic treatment surface by immersion or spraying may be employed.

All the components of the chemical conversion treatment liquid are water-soluble ions. Therefore, various kinds of component ions are adhered to the treatment surface after the electrolytic treatment, or film components which are insufficiently adhered although being precipitated in the washing process after the electrolytic treatment are adhered and moreover may be incorporated into the film along with the zirconium compound. These components may be washed away by a typical water washing treatment. However, in a case of a film with a high adhesion amount of zirconium or in a case where the washing treatment is performed for a short time, the washing treatment is insufficient. Particularly, fluoride ions which are not originally film components are incorporated into the film along with the zirconium compound. The fluoride ions in the film degrade typical adhesion of the coating material or the film imparted onto the corresponding film (primary adhesion) due to water repellency of the ions. Particularly, in the case of the coating material, it is thought that wettability of the coating material which is a liquid phase component is degraded due to the water repellency of fluorine. Therefore, the coating material is repelled, which has an adverse effect on the primary adhesion.

Moreover, the fluoride ions become the cause of deterioration of adhesion of organic films such as the coating material and the film imparted onto the corresponding film in the presence of moisture such as steam during the high-temperature sterilization treatment such as the retort treatment (secondary adhesion), rust resistance, or corrosion resistance under a coating film. It is thought that this because fluoride ions remaining in the film are eluted from the film to the steam or the corrosion liquid and break a bond (a covalent bond, an ionic bond, and the like) to the organic film imparted onto the corresponding film or corrode the substrate steel sheet due to metal corrosive properties of fluorine ions. As a result, lifting or peeling of the imparted coating material or the film occurs. Moreover, there is a possibility this has an effect on the quality of contents packaged after manufacturing the can.

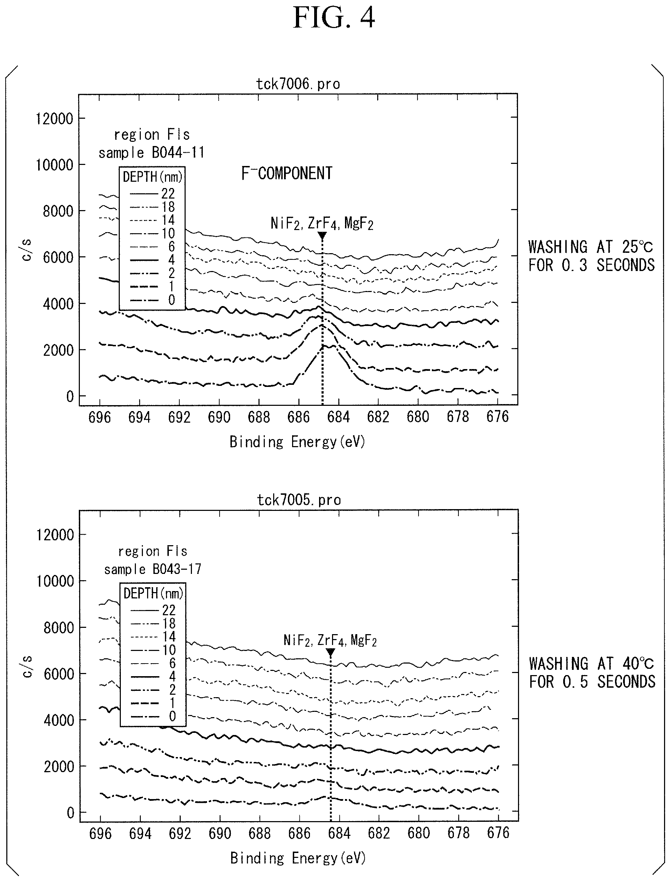

FIG. 4 shows an example of the result of an analysis using XPS on an effect of removing fluorine ions depending on washing conditions. For example, when the immersion washing condition is 25°C and 0.3 seconds, a peak (a binding energy of 682 eV to 687 eV) corresponding to F1s is observed over 8 nm in the depth direction from the outermost surface of the film, and as shown in the example, coating material adhesion and film adhesion are poor. On the other hand, when the immersion washing condition is 40°C and 0.5 seconds, the corresponding peak is not observed, and coating material adhesion and film adhesion are good. Accordingly, it can be seen that:
(a) Fluorine ions remain in the film due to the corresponding treatment.
(b) Fluorine ions are present not only on the surface layer of the film but also in the depth direction (inside the film).
(c) Fluorine components remaining in the film can be removed by washing.
(d) The degree of removal depends on the temperature of the washing water and time.
(e) When the fluorine components are removed, characteristics such as coating material adhesion and film adhesion are enhanced.

In addition, in actual production, stable removal of fluoride ions within a short time is required for a high-speed treatment, so that a fluorine removal method has been intensively studied. Chemically and/or electrochemically performing a fluorine removal treatment may be considered. However, the chemical method needs post-washing and the electrochemical method needs investment in facilities depending on the case, which is not preferable. The inventors found that:
(a) Analysis of ions obtained when a typical treatment is performed under a general water washing condition (15°C to 25°C depending on room temperature and about 0.5 to 1 second) and contained in washing water after the treatment is performed, a few fluoride ions are present and also remain in the treatment film.
(b) Moreover, by increasing the treatment temperature or by lengthening the treatment time, the amount of fluoride ions eluted to the washing water is increased, and the amount of fluoride ions remaining in the film is reduced.
(c) Furthermore, as the amount of fluoride ions is reduced, characteristics such as coating material adhesion and film adhesion are enhanced.

On the basis of the new findings, in consideration of productivity, correlations between the washing treatment time, the washing water temperature, the amount of fluoride ions remaining in the film, and the characteristics such as coating material adhesion and film adhesion were examined in detail. As a result, it was found that it is preferable that the amount of fluoride ions remaining in the film be equal to or less than 5 mg/m², and in order to achieve this, a treatment performed in warm water at 40°C or higher for 0.5 or more seconds is effective. As the background of the findings, it may be considered that the fluoride ions have a small ionic radius and have a low interaction with compounds such as ZrO₂, Zr₃(PO₄)₄, and Zr(HPO₃)₂, which are film components after the formation of the substrate metal and/or the film.

That is, when the amount of fluoride ions remaining in the film exceeds 5 mg/m², deterioration of such characteristics starts to be manifested. Therefore, it is preferable that the amount of fluoride ions be equal to or less than 5 mg/m².

In addition, in order to cause the amount of fluoride ions to be equal to or less than 5 mg/m², after the film of the zirconium compound is formed, a washing treatment may be performed by an immersion treatment or a spraying treatment with warm water. By increasing the treatment temperature or lengthening the treatment time, the amount of fluoride ions may be reduced. Therefore, in order to cause the amount of fluoride ions in the film to be equal to or less than 5 mg/m², an immersion treatment or a spraying treatment may be performed with warm water at 40°C or higher for 0.5 or more seconds. When the water temperature is lower than 40°C or the treatment time is lower than 0.5 seconds, the amount of fluoride ions in the film may not be equal to or less than 5 mg/m², and the above-described characteristics are not present.

Before the above-described washing treatment, preliminary washing with water at a temperature of equal to or higher than 20°C and equal to or less than 60°C may be performed for 0.1 or more seconds. In this case, gelation of the film may be prevented, so that the amount of fluoride ions may be appropriately reduced.

In addition, like the fluoride ions, there may be cases where nitrate ions and ammonium ions that are present in the chemical conversion treatment liquid are incorporated into the film and become the cause of deterioration of adhesion of organic films such as the coating material and the film imparted onto the corresponding film in the presence of moisture such as steam during the high-temperature sterilization treatment such as the retort treatment (secondary adhesion), rust resistance, or corrosion resistance under a coating film. Moreover, the same applies to phosphate ions and water-soluble phenolic resin, which are the film components, and to components that can not be adhered as the film during the formation of the film. As such ions and the like are washed away by the washing after the cathodic electrolytic treatment, adhesion of organic films such as the coating material and the film imparted onto the corresponding film (secondary adhesion), rust resistance, or corrosion resistance under a coating film may be ensured.

In addition, as a washing solution used during the formation of the film, like the solvent used in the chemical conversion treatment solution of the present invention, deionized water, diluted water, or the like may be appropriately used. The electrical conductivity is preferably equal to or less than 10 µS/cm, more preferably equal to or less than 5 µS/cm, and even more preferably equal to or less than 3 µS/cm.

As described above, by performing the cathodic electrolytic treatment in the chemical conversion treatment liquid containing nitrate ions and performing the warm water washing treatment after the treatment, an appropriate adhesion amount of the chemical conversion treatment film may be formed on the surface of the steel sheet without adhesion unevenness within a short time for which industrial production is possible. Therefore, for example, when zirconium ions, hydrogen fluoride, and nitrate ions in the above-described concentration ranges are contained in the chemical conversion treatment liquid, a chemical conversion treatment film having an amount of 5 mg/m² to 50 mg/m² of zirconium component in terms of metal zirconium amount may be formed.

In addition, as described above, it is more preferable to perform the same cathodic electrolytic treatment on the plated steel sheet in which the plated layer is formed on at least one surface. In this case, the chemical conversion treatment film is formed on the plated layer.

### [Examples]

Next, the present invention will be described in more detail using Examples and Comparative Examples, although the present invention is not limited only to the Examples.

### <Plated Layer on Steel Sheet>

Plated layers are applied onto steel sheets 1 to 34 having sheet thicknesses of 0.17 to 0.23 mm by the plating treatment methods A1 to A3 shown in Table 1.

**[Table 1]**

| Plating treatment method | |
|---|---|
| A1 | An original sheet subjected to annealing and temper rolling after cold rolling was subjected to degreasing and pickling and thereafter subjected to nickel plating using a Watts bath. |
| A2 | After cold rolling, nickel plating was performed using a Watts bath, and a nickel diffusion layer was formed during annealing. |
| A3 | An original sheet subjected to annealing and temper rolling after cold rolling was subjected to decreasing and pickling, thereafter subjected to Fe-Ni alloy plating using a bath of sulfate and hydrochloride, and subsequently subjected to Sn plating using a Ferrostan bath. |

The metal Ni amount of the plated steel sheets using A1 and A2, and the metal Ni amount and the metal Sn amount of the plated steel sheets using A3 were measured by an X-ray fluorescence method.

### <Film Formation>

After the plated layers were applied by the above treatments, chemical conversion treatment films were formed by the treatment methods B1 to B7 shown in Table 2.

**[Table 2]**

| Method of forming a chemical conversion treatment film | |
|---|---|
| B1 | A plated steel sheet was immersed into a treatment liquid in which zirconium fluoride and ammonium nitrate were dissolved, and a cathodic electrolysis was performed. |
| B2 | A plated steel sheet was immersed into a treatment liquid in which zirconium fluoride, phosphate, and ammonium nitrate were dissolved, and a cathodic electrolysis was performed. |
| B3 | A plated steel sheet was immersed into a treatment liquid in which zirconium fluoride and ammonium nitrate were dissolved. |
| B4 | A plated steel sheet was immersed into a treatment liquid in which zirconium fluoride and phosphate were dissolved. |
| B5 | A plated steel sheet was immersed into a treatment liquid obtained by dissolving ammonium hexafluorozirconate (IV), hydrogen fluoride, and ammonium nitrate in distilled water of 10 mS/cm or less, and a cathodic electrolysis was performed. |
| B6 | A plated steel sheet was immersed into a treatment liquid obtained by dissolving ammonium hexafluorozirconate (IV), hydrogen fluoride, ammonium nitrate, and phosphate in distilled water of 10 mS/cm or less, and a cathodic electrolysis was performed. |
| B7 | A plated steel sheet was immersed into a treatment liquid obtained by dissolving ammonium hexafluorozirconate (IV), hydrogen fluoride, ammonium nitrate, phosphate, and tannate in distilled water of 10 mS/cm or less, and a cathodic electrolysis was performed. |
| B8 | A plated steel sheet was immersed into a treatment liquid obtained by dissolving ammonium hexafluorozirconate (IV), hydrogen fluoride, ammonium nitrate, phosphate, and nickel nitrate in distilled water of 10 mS/cm or less, and a cathodic electrolysis was performed. |

### <Washing Treatment>

After forming the chemical conversion treatment films by the above treatments, washing treatments were performed by setting the distilled water to predetermined temperatures and performing immersion for predetermined times, thereby controlling surface F-atom number densities.

In Table 3, the compositions C1 to C19 of the chemical conversion treatment liquids used for formation of the chemical conversion treatment films are shown. Although pH was adjusted by adding ammonia water or nitrate, the NO₃⁻ concentrations in Table 3 did not contain the concentrations of added nitrate.

In addition, in Table 4, electrolysis conditions D1 to D17 used for formation of the chemical conversion treatment films are shown.

**[Table 3]**

| | Chemical conversion treatment liquid composition | | | | | | |
|---|---|---|---|---|---|---|---|
| | Zr⁴⁺ (ppm) | HF (ppm) | NO₃⁻ (ppm) | PO₄³⁻ (ppm) | Phenolic resin (ppm) | Tannate (ppm) | pH (-) |
| C1 | 1400 | 100 | 3000 | 1000 | - | - | 3.5 |
| C2 | 2800 | 100 | 18000 | 1000 | - | - | 3.5 |
| C3 | 1400 | 100 | - | 1000 | - | - | 3.5 |
| C4 | 1400 | 100 | 10000 | 1000 | - | - | 3.5 |
| C5 | 1400 | 100 | 15000 | 1000 | - | - | 3.5 |
| C6 | 1400 | 100 | 20000 | 1000 | - | - | 3.5 |
| C7 | 2800 | 400 | 18000 | - | - | - | 3.0 |
| C8 | 100 | 50 | 7500 | 50 | - | - | 3.6 |
| C9 | 2900 | 400 | 20000 | 2000 | - | - | 3.6 |
| C10 | 1500 | 200 | 3000 | 700 | - | 1000 | 3.5 |
| C11 | 1500 | 200 | 3000 | 700 | - | 1000 | 3.5 |
| C12 | 1500 | 20 | 8000 | - | - | - | 3.8 |
| C13 | 1500 | 500 | 800 | - | - | - | 3.8 |
| C14 | 3500 | 100 | - | - | - | - | 3.5 |
| C15 | 4000 | 500 | 900 | 900 | - | - | 2.5 |
| C16 | 2000 | 100 | 38000 | 2500 | - | - | 4.5 |
| C17 | 1500 | 400 | 1500 | 3000 | - | - | 3.6 |
| C18 | 1500 | 200 | 1500 | 3000 | 900 | - | 3.6 |
| C19 | 1500 | 200 | 1500 | 3000 | 450 | - | 3.6 |

**[Table 4]**

| | Electrolysis conditions | | | |
|---|---|---|---|---|
| | Temperature | Current application time per each round | The number of current applications | Total current application time |
| | (°C) | (sec/round) | (round) | (sec) |
| D1 | 30 | 0.3 | 3 | 0.9 |
| D2 | 30 | 0.3 | 6 | 1.8 |
| D3 | 30 | 0.3 | 4 | 1.2 |
| D4 | 30 | 0.3 | 2 | 0.6 |
| D5 | 30 | 0.9 | 1 | 0.9 |
| D6 | 30 | 0.9 | 2 | 1.8 |
| D7 | 50 | 1 | 1 | 1 |
| D8 | 30 | 1.2 | 1 | 1.2 |
| D9 | 30 | 0.9 | 1 | 0.9 |
| D10 | 30 | 0.3 | 3 | 0.9 |
| D11 | 30 | 0.3 | 4 | 1.2 |
| D12 | 50 | 0.6 | 1 | 0.6 |
| D13 | 30 | 0.6 | 1 | 0.6 |
| D14 | 30 | 0.9 | 1 | 0.9 |
| D15 | 30 | 0.6 | 1 | 0.6 |
| D16 | 30 | 0.6 | 2 | 1.2 |
| D17 | 60 | 3 | 1 | 3 |

In Tables 5 and 6, treatment conditions and measurement results regarding the plated layer and the chemical conversion treatment film of each of the steel sheets 1 to 34 are shown. Regarding the plated layer, the plating method (see Table 1), the metal Ni amount, and the metal Sn amount are shown. Regarding the chemical conversion treatment film, the method of forming a chemical conversion treatment film (see Table 2), the chemical conversion treatment liquid used (see Table 3), the electrolysis conditions (see Table 4), the washing conditions, the Zr adhesion amount, the phosphorus adhesion amount, the C adhesion amount, and the F-atom number density are shown.

**[Table 5]**

| Steel sheet | Plated layer | | | Chemical conversion treatment film | | | | | | | | | | |
|---|---|---|---|---|---|---|---|---|---|---|---|---|---|---|
| | Treatment method | Ni adhesion amount | Sn adhesion amount | Treatment method | Chemical conversion treatment liquid | Electrolysis conditions | Washing conditions | | Zr adhesion amount | P adhesion amount | C adhesion amount | F-atom number density | | |
| | | | | | | | Temp. | Time | | | | Outermost surface | 2nm depth | 4nm depth |
| | | (mg/m²) | (mg/m²) | | | | (°C) | (sec) | (mg/m²) | (mg/m²) | (mg/m²) | (at%) | (at%) | (at%) |
| 1* | A1 | 13 | - | B1 | C7 | D2 | 40 | 0.5 | 20.9 | - | - | 1.3 | 1.5 | 0.8 |
| *2 | A1 | 980 | - | B2 | C1 | D1 | 40 | 0.5 | 12.9 | 8.3 | - | <0.5 | <0.5 | <0.5 |
| 3* | A1 | 8 | - | B2 | C2 | D2 | 60 | 0.5 | 43.6 | 28.6 | - | 1.1 | 0.8 | <0.5 |
| 4* | A1 | 1200 | - | B2 | C1 | D3 | 40 | 0.5 | 10.6 | 0.2 | - | 0.6 | 0.8 | <0.5 |
| *5 | A1 | 550 | - | B2 | C4 | D6 | 40 | 0.5 | 49.2 | 24.1 | - | 1.8 | 1.5 | 0.8 |
| 6* | A2 | 11 | - | B2 | C5 | D4 | 70 | 3 | 12.6 | 5.3 | - | <0.5 | <0.5 | <0.5 |
| 7* | A2 | 670 | - | B4 | C3 | - | 70 | 3 | 3.2 | 1.1 | - | <0.5 | <0.5 | <0.5 |
| 8* | A3 | 19 | 1050 | B2 | C6 | D8 | 40 | 0.5 | 15.3 | 7.1 | - | 0.6 | <0.5 | <0.5 |
| 9* | A3 | 24 | 1120 | B3 | C7 | - | 40 | 0.5 | 13.8 | - | - | 1.3 | 0.8 | <0.5 |
| 10* | A3 | 430 | 430 | B4 | C3 | - | 40 | 0.5 | 3.2 | 0.7 | - | <0.5 | <0.5 | <0.5 |
| 11* | A1 | 7 | - | B1 | C12 | D12 | 70 | 0.5 | 0.8 | - | - | <0.5 | <0.5 | <0.5 |
| 12* | A1 | 550 | - | B1 | C13 | D17 | 15 | 0.5 | 25.2 | - | - | 3.6 | 4.4 | 2.8 |
| 13* | A2 | 8 | - | B4 | C14 | - | 40 | 0.3 | 0.3 | 0.3 | - | 2.3 | 2.1 | 1.8 |

| | | | | | | | | | | | | | | |
|---|---|---|---|---|---|---|---|---|---|---|---|---|---|---|
| * not within the claims | | | | | | | | | | | | | | |

**[Table 6]**

| Steel sheet | Plated layer | | | Chemical conversion treatment film | | | | | | | | | | |
|---|---|---|---|---|---|---|---|---|---|---|---|---|---|---|
| | Treatment method | Ni adhesion amount | Sn adhesion amount | Treatment method | Chemical conversion treatment liquid | Electrolysis conditions | Washing conditions | | Zr adhesion amount | P adhesion amount | C adhesion amount | F-atom number density | | |
| | | | | | | | Temp. | Time | | | | Outermost surface | 2nm depth | 4nm depth |
| | | (mg/m²) | (mg/m²) | | | | (°C) | (mg/m²) | (mg/m²) | (mg/m²) | (mg/m²) | (at%) | (at%) | (at%) |
| 14 | A1 | 510 | - | B6 | C1 | D1 | 40 | 0.5 | 12.3 | 6.9 | - | <0.5 | <0.5 | <0.5 |
| 15 | A1 | 490 | - | B6 | C2 | D2 | 40 | 0.5 | 45.1 | 23.6 | - | 0.2 | <0.5 | <0.5 |
| 16 | A1 | 500 | - | B6 | C1 | D3 | 90 | 0.5 | 21.9 | 12.9 | - | <0.5 | <0.5 | <0.5 |
| 17 | A1 | 510 | - | B6 | C4 | D4 | 90 | 0.5 | 29.2 | 14.6 | - | <0.5 | <0.5 | <0.5 |
| 18 | A1 | 510 | - | B6 | C5 | D5 | 90 | 0.5 | 39.4 | 20.1 | - | <0.5 | <0.5 | <0.5 |
| 19* | A1 | 490 | - | B6 | C6 | D6 | 40 | 0.5 | 49.8 | 27.3 | - | 1.9 | 1.3 | 0.9 |
| 20* | A1 | 1000 | - | B5 | C7 | D7 | 50 | 0.5 | 19.3 | - | - | <0.5 | <0.5 | <0.5 |
| 21* | A1 | 10 | - | B6 | C8 | D8 | 50 | 0.5 | 15.2 | 1.6 | - | <0.5 | <0.5 | <0.5 |
| 22* | A1 | 10 | - | B6 | C9 | D9 | 50 | 0.5 | 15.6 | 24.6 | - | 1.1 | 0.6 | <0.5 |
| 23* | A1 | 1500 | - | B7 | C10 | D10 | 70 | 3 | 11.8 | 6.4 | 7.8 | <0.5 | <0.5 | <0.5 |
| 24 | A2 | 490 | - | B7 | C11 | D11 | 40 | 0.5 | 20.3 | 9.4 | 6.7 | 0.8 | 0.6 | 0.5 |
| 25 | A1 | 550 | - | B8 | C1 | D1 | 40 | 0.5 | 12.9 | 7.2 | - | <0.5 | <0.5 | <0.5 |
| 26 | A2 | 550 | - | B8 | C1 | D1 | 40 | 0.5 | 14.3 | 8.3 | - | <0.5 | <0.5 | <0.5 |
| 27* | A1 | 5 | - | B5 | C12 | D12 | 20 | 0.5 | 16.8 | - | - | 6.3 | 4.3 | 3.1 |
| 28* | A1 | 520 | - | B5 | C13 | D13 | 40 | 0.1 | 0.8 | - | - | <0.5 | <0.5 | <0.5 |
| 29* | A1 | 490 | - | B5 | C14 | D14 | 30 | 0.3 | 2.1 | - | - | 8.6 | 6.1 | 2.3 |
| 30* | A1 | 510 | - | B6 | C15 | D15 | 40 | 0.5 | 0.9 | 0.6 | - | <0.5 | <0.5 | <0.5 |
| 31* | A1 | 520 | - | B6 | C16 | D16 | 20 | 0.3 | 52.9 | 6.9 | - | 10.6 | 8.2 | 6.9 |
| 32* | A1 | 550 | - | B6 | C17 | D17 | 20 | 0.3 | 10.6 | 26.4 | - | 6.1 | 4.6 | 3.9 |
| 33* | A1 | 550 | - | B6 | C18 | D1 | 70 | 3 | 12.8 | 6.1 | 7.1 | 1.6 | 1.1 | 0.6 |
| 34* | A1 | 550 | - | B6 | C19 | D1 | 70 | 3 | 10.6 | 4.3 | 3.2 | 0.9 | 0.5 | <0.5 |

| | | | | | | | | | | | | | | |
|---|---|---|---|---|---|---|---|---|---|---|---|---|---|---|
| * not within the claims | | | | | | | | | | | | | | |

The metal Ni amount and the metal Sn amount in the plated layer were obtained by an X-ray fluorescence measurement method.

The Zr adhesion amount and the phosphorus adhesion amount in the chemical conversion treatment films were measured by a quantitative analysis method using fluorescent X-rays. In addition, the amount of carbon in the chemical conversion treatment films was obtained by deducting the amount of carbon contained in the steel sheet as a background from a value measured by, for example, a total carbon amount measurement method through gas chromatography.

The surface F-atom number densities were obtained by XPS analysis. Sputtering was performed on the outermost surface of the chemical conversion treatment film, and the surface F-atom number densities at a surface with a depth of 2 nm and a surface with a depth of 4 nm from the outermost surface were measured regarding the surface of each of samples under the conditions shown in Table 7 and were calculated from the peak area in the vicinity of 682 to 688 eV focusing on 684 eV which is a binding energy corresponding to F1s. Each measurement was performed on ten arbitrary sites of the steel sheet treatment surface, and an average value of the ten sites was obtained as the measurement value. During the XPS measurement, after the outermost surface was measured, analysis was also performed on the sites at 2 nm and 4 nm from the surface different in sputtering. For the analysis, MultiPalV. 8.0 (manufactured by Ulvac-phi) was used. Energy correction of XPS spectrums obtained so that the binding energies become C1s=254.8 eV and Ni2p_{3/2}=852.7 eV was performed.

**[Table 7]**

| Apparatus | Quantum 2000-type XPS analysis apparatus manufactured by PHI | |
|---|---|---|
| XPS measurement conditions | X-ray source | A1 Ka: 1486.6eV |
| | X-ray output | 15kV, 25W |
| | Measurement region | 100 µmϕ |
| | Degree of vacuum in analysis lab | 2.1×10⁻⁷ Pa |
| | Sputtering speed (in terms of SiO₂) | 17.6 nm/min |

### <Performance Evaluation>

Evaluation measurement was performed on the steel sheets 1 to 34 subjected to the above treatments for each of the items (A) to (I) as follows.

### (A) Workability

A PET film with a thickness of 20 µm was laminated on both surfaces of a test material at 200°C, can manufacturing processes using a drawing process and an ironing process were performed in stages, flaws, lifting, and peeling of the film were observed, and from the area ratio thereof, the formation was evaluated in four stages (A: with no flaws, lifting, and peeling of the film, B: the area ratio of flaws, lifting, and peeling of the film was higher than 0% and equal to or less than 0.5%, C: the area ratio of flaws, lifting, and peeling of the film was higher than 0.5% and equal to or less than 15%, and D: the area ratio of flaws, lifting, and peeling of the film was higher than 15% or a process was impossible due to breakage).

### (B) Weldability

Using a wire seam welding machine, under a condition of a welding wire speed of 80 m/min, the test material was welded by changing current, overall determination was made from the area of an appropriate current range of the minimum current value at which a sufficient welding strength was obtained and the maximum current value at which welding defects such as dust and welding spatter were visible, and weldability was evaluated in four stages (A: the appropriate current range on the secondary side was 1500 A or higher, B: the appropriate current range on the secondary side was equal to or higher than 800 A and less than 1500 A, C: the appropriate current range on the secondary side was equal to or higher than 100 A and less than 800 A, and D: the appropriate current range on the secondary side was less than 100A).

### (C) Film Adhesion

A PET film with a thickness of 20 µm was laminated on both surfaces of a test material at 200°C, a can body was manufactured by performing a drawing and ironing process, a retort treatment was performed at 125°C for 30 minutes, the peeling status of the film was observed, and evaluation was made from the peeling area ratio in four stages (A: the peeling area ratio was 0%, B: the peeling area ratio was higher than 0% and equal to or less than 2%, C: the peeling area ratio was higher than 2% and equal to or less than 10%, and D: the peeling area ratio was higher than 10%).

### (D) Primary Coating Material Adhesion

An epoxy-phenolic resin was applied to a test material, the resultant was subjected to baking at 200°C for 30 minutes, a grid was formed into a depth reaching the substrate steel at an interval of 1 mm, the resultant was peeled by a tape, the peeling status was observed, and evaluation was made from the peeling area ratio in four stages (A: the peeling area ratio was 0%, B: the peeling area ratio was higher than 0% and equal to or less than 5%, C: the peeling area ratio was higher than 5% and equal to or less than 30%, and D: the peeling area ratio was higher than 30%).

### (E) Secondary Coating Material Adhesion

An epoxy-phenolic resin was applied to a test material, the resultant was subjected to baking at 200°C for 30 minutes, a grid was formed into a depth reaching the substrate steel at an interval of 1 mm, a retort treatment was thereafter performed at 125°C for 30 minutes, drying was performed, and the coating film was thereafter peeled by a tape, the peeling status was observed, and evaluation was made from the peeling area ratio in four stages (A: the peeling area ratio was 0%, B: the peeling area ratio was higher than 0% and equal to or less than 5%, C: the peeling area ratio was higher than 5% and equal to or less than 30%, and D: the peeling area ratio was higher than 30%).

### (F) Corrosion Resistance under Coating Film

An epoxy-phenolic resin was applied to a test material, the resultant was subjected to baking at 200°C for 30 minutes, a cross-cut was formed into a depth reaching the substrate steel, the resultant was immersed into a test liquid made of a liquid mixture of 1.5% citric acid and 1.5% common salt at 45°C for 72 hours, washing and drying were performed, tape peeling was thereafter performed, the corrosion status under a coating film of the cross-cut portion and the corrosion status of a flat sheet portion were observed, and determination was made from evaluation of both the width of corrosion under a coating film and the corrosion area ratio of the flat sheet portion in four stages (A: the corrosion width under a coating film was less than 0.2 mm and the corrosion area ratio of the flat sheet portion is 0%, B: the corrosion width under a coating film was equal to or higher than 0.2 mm and less than 0.3 mm and the corrosion area ratio of the flat sheet portion was higher than 0% and equal to or less than 1%, C: the corrosion width under a coating film was equal to or higher than 0.3 mm and less than 0.45 mm and the corrosion area ratio of the flat sheet portion was higher than 1% and equal to or less than 5%, and D: the corrosion width under a coating film was higher than 0.45 mm and the corrosion area ratio of the flat sheet portion is higher than 5%), thereby achieving evaluation.

### (G) Rust Resistance

A test material was subjected to a retort treatment at 125°C for 30 minutes, a rust occurrence status was observed, and evaluation was made from the rust occurrence area ratio in four stages (A: the rust occurrence area ratio was 0%, B: the rust occurrence area ratio was higher than 0% and equal to or less than 1%, C: the rust occurrence area ratio was higher than 1% and equal to or less than 5%, and D: the rust occurrence area ratio was higher than 5%).

### (H) Stability of Chemical Conversion Treatment Liquid

Each chemical conversion treatment liquid of the Examples and the Comparative Examples was adjusted, was agitated in a state of being heated to 60°C, and was left at 5°C for 10 days. The liquid with no insoluble matter precipitated was evaluated as A, the liquid with a small amount of insoluble matter precipitated was evaluated as B, and the liquid with a significant amount of insoluble matter precipitated was evaluated as C.

### (I) Outer Appearance

Each test material of the Examples and the Comparative Examples was observed with the naked eye and was evaluated from the status of unevenness generated in the chemical conversion treatment film. As a result, the film with no unevenness was evaluated as A, the film with an extremely small degree of unevenness that is no problem in practice was evaluated as B, the film with a small degree of unevenness generated was evaluated as C, and the film with a significant degree of unevenness generated was evaluated as D.

The results of the above evaluation are shown in Tables 8 and 9.

**[Table 8]**

| Steel sheet | Evaluation | | | | | | | | | |
|---|---|---|---|---|---|---|---|---|---|---|
| | Workability | Weldability | Film adhesion | Coating material adhesion | | Corrosion resistance under coating film | Rust resistance | Stability of chemical conversion treatment liquid | | Outer appearance |
| | | | | Primary | Secondary | | | 60°C | 5°C | |
| 1 * | A | B | B-C | B | B | B | A-B | A | A | A |
| 2 * | A | A | A | A | A | A | A | A | A | A |
| 3 * | A | C | B | B | B | B | B | A | A | A-B |
| 4 * | A | A | B-C | B | B | B | A | A | A | A |
| 5 * | A | B | A | A | A | A-B | A | A | A | B |
| 6 * | A | B | B | B | B-C | B | B | A | A | A-B |
| 7 * | A | B | B | A | B | B | A | A | A | A |
| 8 * | A | B | B-C | B | B | B | A | A | A | A |
| 9 * | A | B | B-C | B | B | B | A | A | A | A |
| 10 * | A | A | A-B | A | A | A | A | A | A | A |
| 11 * | A | C | D | C | D | D | D | A | A | A |
| 12 * | A | B | C-D | B | C-D | C-D | B-C | A | A | A |
| 13 * | C | A | D | C-D | D | D | B | A | A | A |

| | | | | | | | | | | |
|---|---|---|---|---|---|---|---|---|---|---|
| * not within the claims | | | | | | | | | | |

**[Table 9]**

| Steel sheet | Evaluation | | | | | | | | | |
|---|---|---|---|---|---|---|---|---|---|---|
| | Workability | Weldability | Film adhesion | Coating material adhesion | | Corrosion resistance under coating film | Rust resistance | Stability of chemical conversion treatment liquid | | Outer appearance |
| | | | | Primary | Secondary | | | 60°C | 5°C | |
| 14 | A | A | A-B | A | A | A | A-B | A | A | A |
| 15 | A | B | A | A | A | A | A | A | A | A-B |
| 16 | A | A | A | A | A | A | B | A | A | A |
| 17 | A | A | A | A | A | A | A | A | A | A |
| 18 | A | A | A | A | A | A | A | A | A | A-B |
| 19 * | A | B-C | A-B | B | B | A | A | A | A | B |
| 20 * | A | A | B | B | B | B | A-B | A | A | A |
| 21 * | A | A | B | B | C | B | B | A | A | A |
| 22 * | A | A | A | B | C | B | B | A | A | A |
| 23 * | A | A | A | A | A | A | A | A | A | A |
| 24 | A | A | A-B | A | A-B | A | A | A | A | A |
| 25 | A | A | A-B | A | A-B | A | A | A | A | A |
| 26 | A | A | A-B | A | A-B | A | A | A | A | A |
| 27 * | A | A | C-D | C | D | B | B | C | B | D |
| 28 * | A | C | D | C | D | C-D | D | A | A | C |
| 29 * | A | A | D | C-D | D | B | B | C | B | D |
| 30 * | A | A | D | C | D | D | D | C | B | D |
| 31 * | A | C | D | D | D | C-D | C-D | C | C | D |
| 32 * | A | C | C-D | C | C-D | D | C-D | C | C | C |
| 33 * | A | C | A | A | A | A | A | C | B | C |
| 34 * | A | C | A | A | A | A | A | C | B | C |

| | | | | | | | | | | |
|---|---|---|---|---|---|---|---|---|---|---|
| * not within the claims | | | | | | | | | | |

From Tables 8 and 9, it can be seen that all the steel sheets that belong to the ranges of the present invention have excellent workability, weldability, film adhesion, primary coating material adhesion, secondary coating material adhesion, corrosion resistance under a coating film, and rust resistance. On the other hand, it can be seen that the steel sheets that do not satisfy any of requirements of the present invention are degraded in at least a part of characteristics including workability, weldability, film adhesion, primary coating material adhesion, secondary coating material adhesion, corrosion resistance under a coating film, and rust resistance. Particularly, it can be seen that when the requirement of the water washing treatment method is not satisfied, the F-atom number density remaining on the surface of the film is increased, and the characteristics including film adhesion, primary coating material adhesion, secondary coating material adhesion, corrosion resistance under a coating film, and rust resistance are degraded. In addition, it can be seen that, by adding nitrate ions to the chemical conversion treatment liquid, a zirconium film containing a high amount of zirconium may be efficiently manufactured, and good outer appearance may be ensured.

While the exemplary embodiments of the present invention have been described in detail, the present invention is not limited to the embodiments but is defined by the appended claims.

### Industrial Applicability

According to the present invention, it is possible to provide a steel sheet for a container having excellent workability, weldability, film adhesion, coating material adhesion, corrosion resistance under a coating film, rust resistance, and outer appearance, and a method of manufacturing the same.

## Claims

1. A method for manufacturing a steel sheet for a container,
wherein the steel sheet comprises:
a plated layer containing an adhesion amount of 300 to 1000 mg/m² of nickel, provided on at least one surface of a steel sheet as a metal Ni; and
a chemical conversion treatment film formed on the plated steel sheet,
wherein a metal Zr adhesion amount of the chemical conversion treatment film is 1.0 to 50 mg/m²,
an amount of 0.5 to 25 mg/m² of a phosphate compound is contained in terms of P amount, and
an F-atom number density measured by XPS analysis of a plane of 2 nm and a plane of 4 nm in a depth direction obtained by a sputtering treatment is equal to or less than 2 at%,
the method comprising:
applying a plated layer containing an adhesion amount of 300 to 1000 mg/m² of nickel as metal Ni to at least one surface of a steel sheet;
forming a chemical conversion treatment film on the plated steel sheet by performing a cathodic electrolytic treatment with a solution containing a zirconium compound which is ammonium hexafluorozirconate (IV), F ions, phosphate ions, and nitrate ions and having a pH in a range of 3 to 4, and thereafter performing a washing treatment with warm water at 40°C or higher for 0.5 or more seconds, wherein
the temperature of the solution for the cathodic electrolytic treatment is in the range of 10°C to 50°C;
and wherein in the solution for the cathodic electrolytic treatment the concentration of zirconium compound is 100 to 3000 ppm as zirconium metal element, the concentration of HF is 50 to 400 ppm, the concentration of phosphate ions is 50 to 2000 ppm and the concentration of nitrate ions is equal to or higher than 3000 ppm, wherein the electrolysis current density of the cathodic electrolytic treatment is 0.05 to 50 A/dm² and the current application time of the cathodic electrolytic treatment is 0.01 to 5s.

2. The method of manufacturing the steel sheet for a container according to Claim 1, the method further comprising:
performing a preliminary washing treatment with water at a temperature of equal to or higher than 20°C and equal to or less than 60°C for 0.1 or more seconds before performing the washing treatment with warm water at 40°C or higher for 0.5 or more seconds.

## Patentansprüche

1. Ein Verfahren zur Herstellung eines Stahlblechs für einen Behälter,
wobei das Stahlblech umfasst:
eine Plattierungsschicht, welche eine anhaftende Menge von 300 bis 1000 mg/m² an Nickel enthält, die auf mindestens einer Oberfläche eines Stahlblechs als ein Ni-Metall bereitgestellt ist; und
einen durch chemische Umwandlungsbehandlung gebildeten Film, welcher auf dem plattierten Stahlblech gebildet ist,
wobei eine anhaftende Menge an Zr-Metall des durch chemische Umwandlungsbehandlung gebildeten Films 1,0 bis 50 mg/m² beträgt,
eine Menge von 0,5 bis 25 mg/m² einer Phosphatverbindung enthalten ist, ausgedrückt als P-Menge, und
eine F-Atomzahldichte, welche durch XPS-Analyse einer Ebene von 2 nm und einer Ebene von 4 nm in einer Tiefenrichtung, erhältlich durch Sputter-Behandlung, gemessen wird, gleich oder kleiner als 2 at% ist,
wobei das Verfahren umfasst:
Aufbringen einer Plattierungsschicht, welche eine anhaftende Menge von 300 bis 1000 mg/m² an Nickel als Ni-Metall enthält, auf mindestens eine Oberfläche eines Stahlblechs;
Bilden eines durch chemische Umwandlungsbehandlung gebildeten Films auf dem plattierten Stahlblech durch das Durchführen einer kathodischen elektrolytischen Behandlung mit einer Lösung, welche eine Zirconium-Verbindung, welche Ammonium-Hexafluorozirconat (IV) ist, F-Ionen, Phosphationen und Nitrationen enthält und einen pH im Bereich von 3 bis 4 aufweisen, und anschließend Durchführen einer Waschbehandlung mit warmem Wasser bei 40°C oder höher für 0,5 oder mehr Sekunden, wobei
die Temperatur der Lösung für die kathodische elektrolytische Behandlung im Bereich von 10°C bis 50°C liegt;
und wobei in der Lösung für die kathodische elektrolytische Behandlung die Konzentration an Zirconium-Verbindung 100 bis 3000 ppm als Zirconiummetallelement beträgt, die Konzentration an HF 50 bis 400 ppm beträgt, die Konzentration an Phosphationen 50 bis 2000 ppm beträgt und die Konzentration an Nitrationen gleich oder höher ist als 3000 ppm;
wobei die Elektrolysestromdichte der kathodischen elektrolytischen Behandlung 0,05 bis 50 A/dm² beträgt und die Anwendungsdauer des Stroms der kathodischen elektrolytischen Behandlung 0,01 bis 5s beträgt.

2. Das Verfahren zur Herstellung eines Stahlbleches für einen Behälter gemäß Anspruch 1, wobei das Verfahren ferner umfasst:
Durchführen einer einleitenden Waschbehandlung mit Wasser bei einer Temperatur gleich oder höher als 20°C und gleich oder weniger als 60°C für 0,1 oder mehr Sekunden vor Durchführen der Waschbehandlung mit warmem Wasser bei 40°C oder höher für 0,5 oder mehr Sekunden.

## Revendications

1. Procédé de fabrication d'une tôle d'acier pour un conteneur,
dans lequel la tôle d'acier comprend :
une couche plaquée contenant une quantité d'adhérence de 300 à 1 000 mg/m² de nickel, fournie sur au moins une surface d'une tôle d'acier comme un Ni de métal ; et
un film de traitement de conversion chimique formé sur la tôle d'acier plaquée,
dans lequel une quantité d'adhérence de Zr de métal du film de traitement de conversion chimique est de 1,0 à 50 mg/m²,
une quantité de 0,5 à 25 mg/m² d'un composé de phosphate est contenue en termes de quantité de P, et
une densité de nombre d'atomes F mesurée par analyse XPS d'un plan de 2 nm et d'un plan de 4 nm dans une direction de profondeur obtenue par un traitement de pulvérisation cathodique est inférieure ou égale à 2 % at,
le procédé comprenant :
l'application d'une couche plaquée contenant une quantité d'adhérence de 300 à 1 000 mg/m² de nickel comme Ni de métal sur au moins une surface d'une tôle d'acier ;
la formation d'un film de traitement de conversion chimique sur la tôle d'acier plaquée en réalisant un traitement électrolytique cathodique avec une solution contenant un composé de zirconium qui est l'hexafluorozirconate d'ammonium (IV), des ions F, des ions phosphates et des ions nitrates et ayant un pH dans un intervalle de 3 à 4, et la réalisation subséquente d'un traitement de lavage avec de l'eau chaude à 40°C ou supérieure pendant 0,5 seconde ou plus,
dans lequel
la température de la solution pour le traitement électrolytique cathodique se trouve dans l'intervalle de 10°C à 50°C ;
et dans lequel dans la solution pour le traitement électrolytique cathodique la concentration de composé de zirconium est de 100 à 3 000 ppm comme élément de métal de zirconium, la concentration de HF est de 50 à 400 ppm, la concentration d'ions phosphates est de 50 à 2 000 ppm et la concentration d'ions nitrates est supérieure ou égale à 3 000 ppm,
dans lequel la densité de courant d'électrolyse du traitement électrolytique cathodique est de 0,05 à 50 A/dm² et la durée d'application de courant du traitement électrolytique cathodique est de 0,01 à 5 s.

2. Procédé de fabrication de la tôle d'acier pour un conteneur selon la revendication 1, le procédé comprenant de plus :
la réalisation d'un traitement de lavage préliminaire avec de l'eau à une température supérieure ou égale à 20°C et inférieure ou égale à 60°C pendant 0,1 seconde ou plus avant la réalisation du traitement de lavage avec de l'eau chaude à 40°C ou supérieure pendant 0,5 seconde ou plus.
